# EUROPEAN PATENT APPLICATION

(11) **EP 4 804 622 A1**
(43) Date of publication of application: **09.09.2026**
(21) Application number: 24894550.3
(22) Date of filing: 18.11.2024
(51) Int. Cl.: H04W 36/08, H04W 36/00, H04W 36/02, H04W 40/36, H04W 24/04, H04W 88/08

(54) **ELECTRONIC DEVICE AND OPERATING METHOD THEREOF**

(30) Priority: 22.11.2023 KR 20230163791
(71) Applicant: Samsung Electronics Co., Ltd., Suwon-si, Gyeonggi-do 16677 (KR)
(72) Inventor: CHOI, Jongwoo, Suwon-si, Gyeonggi-do 16677 (KR); PARK, Hanjung, Suwon-si, Gyeonggi-do 16677 (KR); HONG, Youngki, Suwon-si, Gyeonggi-do 16677 (KR)
(74) Representative: Appleyard Lees IP LLP
(86) International application number: PCT/KR2024/018182
(87) International publication number: WO 2025/110657

(57) **Abstract**

This operating method of an electronic device may comprise, for migration of a target cell from a first distributed unit (DU) to a second DU, the steps of: controlling a first operation of copying cell configuration information about the target cell of the first DU to the second DU; identifying whether one or more operations for the migration of the target cell from the first DU to the second DU fail; and removing the cell configuration information from the second DU on the basis of a failure of at least one of the one or more operations.

## Description

### Technical Field

The present disclosure relates to a method and electronic device for migrating a target cell from a source distributed unit (DU) to a target DU.

### Background Art

In the communication industry, a technology for a virtualized radio access network (RAN), i.e., a virtualized RAN (vRAN), is rapidly growing. A conventional hardware-based RAN requires specific hardware for performing each function for communication, and mobile communication companies have to build the RAN with hardware configurations of the same manufacturer due to problems such as hardware compatibility, and the like. However, the vRAN is a software-based RAN rather than a hardware-based RAN, and vRAN communication functions may be performed by a software configuration. That is, the vRAN does not require special hardware for performing functions for communication, and the software configuration of the vRAN may perform functions for communication by being executed through a general-purpose server device. Accordingly, mobile communication companies may build a vRAN by using products of various manufacturers without being dependent on products of one manufacturer.

### Disclosure of Invention

### Solution to Problem

The present disclosure may be implemented in various schemes including as a method, a system, a device, or a computer program stored in a computer-readable storage medium.

In an embodiment of the present disclosure, an operating method of an electronic device may include controlling a first task of replicating cell configuration information for a target cell of a first distributed unit (DU) to a second DU, for migration of the target cell from the first DU to the second DU. In an embodiment of the present disclosure, the operating method of the electronic device may include identifying whether one or more tasks for migration of the target cell from the first DU to the second DU fail. In an embodiment of the present disclosure, the operating method of the electronic device may include removing the cell configuration information from the second DU, based on a failure of at least one task among the one or more tasks.

In an embodiment of the present disclosure, a program for performing the operating method of the electronic device on a computer may be recorded in a computer-readable recording medium.

In an embodiment of the present disclosure, an electronic device may include a memory storing one or more instructions and at least one processor configured to execute the one or more instructions stored in the memory. In an embodiment of the present disclosure, the at least one processor may execute the one or more instructions to cause the electronic device to control a first task of replicating cell configuration information for a target cell of a first DU to a second DU, for migration of the target cell from the first DU to the second DU. In an embodiment of the present disclosure, the at least one processor may execute the one or more instructions to cause the electronic device to identify whether one or more tasks for migration of the target cell from the first DU to the second DU fail. In an embodiment of the present disclosure, the at least one processor may execute the one or more instructions to cause the electronic device to remove the cell configuration information from the second DU, based on a failure of at least one task among the one or more tasks.

### Brief Description of Drawings

FIG. 1 is a diagram illustrating an example of a structure of a wireless communication system according to an embodiment of the present disclosure.
FIG. 2 is a flowchart illustrating an example of a method of migrating a cell from a source distributed unit (DU) to a target DU, according to an embodiment of the present disclosure.
FIG. 3 is a diagram illustrating an example in which an electronic device controls a first task, according to an embodiment of the present disclosure.
FIG. 4 is a diagram illustrating an example of removing cell configuration information from a target DU according to a failure of a first task, according to an embodiment of the present disclosure.
FIG. 5 is a diagram illustrating an example in which an electronic device controls a second task, according to an embodiment of the present disclosure.
FIG. 6 is a diagram illustrating an example of removing medium access control (MAC) context and cell configuration information from a target DU according to a failure of a second task, according to an embodiment of the present disclosure.
FIG. 7 is a diagram illustrating an example in which an electronic device controls a third task, according to an embodiment of the present disclosure.
FIG. 8A is a diagram illustrating an example of re-changing a fronthaul path and a control path according to a failure of a third task and removing MAC context and cell configuration information from a target DU, according to an embodiment of the present disclosure.
FIG. 8B is a diagram illustrating an example of removing MAC context and MAC/PHY cell configuration information from a source DU according to success of a third task, according to an embodiment of the present disclosure.
FIG. 9 is a diagram illustrating an example in which an electronic device controls a fourth task, according to an embodiment of the present disclosure.
FIG. 10 is a diagram illustrating an example of an operating method of an electronic device, according to an embodiment of the present disclosure.
FIG. 11 is a diagram illustrating an example of an electronic device according to an embodiment of the present disclosure.

### Mode for the Invention

As the present disclosure allows for various changes and numerous embodiments, specific embodiments will be illustrated in the drawings and described in detail in the descriptions. However, this is not intended to limit the present disclosure to specific modes of practice, and it should be understood that the present disclosure includes all modifications, equivalents, and substitutes included in the spirit and scope of the present disclosure.

In describing the embodiments, when it is determined that detailed descriptions of the related art may unnecessarily obscure the gist of the present disclosure, the detailed descriptions thereof are omitted. In addition, numerals (e.g., first, second, etc.) used in the descriptions of the embodiment are used only to distinguish one element from another element. In addition, unless the context clearly dictates otherwise, it may be understood that the singular forms "a", "an", and "the" include a plurality of objects.

Further, it should be understood that blocks in each flowchart and combinations of flowcharts may be performed by one or more computer programs including computer-executable instructions. The one or more computer programs may be all stored in a single memory, or may be divided and stored in a plurality of different memories.

All functions or operations described in the specification may be processed by one processor or a combination of processors. The one processor or the combination of processors may be circuitry that performs processing, and may include the circuitry such as an application processor (AP), a communication processor (CP), a graphical processing unit (GPU), a neural processing unit (NPU), a microprocessor unit (MPU), a system on chip (SoC), an integrated chip (IC), or the like.

Hereinafter, embodiments of the present disclosure will be described in detail with reference to the accompanying drawings to allow one of skill in the art to easily carry out the present disclosure. However, the present disclosure may be implemented in various different forms and should not be limited to the embodiments described herein. Prior to the detailed descriptions of the present disclosure, the terms used in the present specification may be defined or understood as follows.

In the present specification, when an element is referred to as being "connected" to another element or "coupled" to the other element, it should be understood that the element may be directly connected to the other element or may be directly coupled to the other element, but unless otherwise stated, the element may be connected or coupled to the other element by having an intervening element interposed therebetween. In addition, the "connection" may include a wireless connection or a wired connection.

In addition, in the present specification, regarding an element represented as a "... unit" or a "module", two or more elements may be combined into one element, or one element may be divided into two or more elements for each further subdivided function. In addition, each element to be described below may additionally perform some or all of functions performed by another element, in addition to the main functions of itself, and some of the main functions of each element may be exclusively performed by another element.

In the present disclosure, the expression "at least one of a, b, or c" may indicate only a, only b, only c, both a and b, both a and c, both b and c, all of a, b, and c, or variations thereof. In the present disclosure, the expression "a or b" may indicate "a", "b", "a and b", or variations thereof. In the present disclosure, the expression "a (or, b, c)" or the expression "a, b, or c" may refer to "a", "b", "c", "a and b", "a and c", "b and c", "a, b, and c", or variations thereof.

In an embodiment of the present disclosure, the term "migration" may include that migration target information included in any logical or physical space is moved, copied, replicated, or synchronized to any other space. In an embodiment of the present disclosure, the term "migration" may include allowing migration target information (e.g., context information) included, stored, or configured in space A (or device A or module A) to be included, stored, or configured in space B (or device B or module B). In an embodiment of the present disclosure, "migration" may include allowing migration target information included, stored, or set in space A (or device A or module A) to be included, stored, or set in space B (device B or module B), and removing, deleting, or releasing the migration target information from the space A (device A or module A).

In an embodiment of the present disclosure, "cell migration" may include migration of at least one of information, context, or interface associated with a cell. For example, "cell migration" may include migration of cell configuration information. For example, "cell migration" may be migration on a per-cell basis, and may include cell configuration information and migration of a user equipment (UE) context of a UE associated with a cell. For example, "cell migration" may include migration of a UE context of a UE associated with a cell, as migration on a per-UE basis. For example, the "cell migration" may include migration of an interface (e.g., a F1-U interface) for user data as migration of a UE unit.

In an embodiment of the present disclosure, "cell configuration information" may include information about a basic configuration, an operation scheme, a configuration, or a parameter of each cell in a wireless communication system. For example, the "cell configuration information" may include information on a frequency band, a channel band, frequency allocation information, a transmission output power configuration, a cell identifier, a configuration in time and frequency domains, interference management with other cells and a base station, scheduling (e.g., downlink (DL)/uplink (UL) max resource block, physical downlink shared channel (PDSCH), physical uplink shared channel (PUSCH), synchronization signal block (SSB), etc.), or timing (e.g., the number of slots per flame, etc.).

In an embodiment of the present disclosure, the "UE context" may include information for wireless communication of a UE in a wireless communication system. For example, the "UE context" may include location information of the UE, a UE identifier, a state of the UE, service requirements, information about a network and cell currently being used, capability information of the UE, function information, security information, or authentication information. For example, the "UE context" may include a unique number (e.g., a radio network temporary identifier (RNTI)) for each situation of UEs connected to the base station, information (e.g., buffer occupancy (BO)) on a DL Data volume for each UE, information (e.g., buffer status report (BSR)) on a UL data volume for each UE, a physical downlink control channel (PDCCH) monitoring period (e.g., discontinuous reception (DRX)) for the UE to transmit and receive new DL/UL traffic, and retransmission information (e.g., hybrid automatic repeat request (HARQ) information) for each UE. For example, a "UE context" may include different parameter values or data for each of a plurality of UEs associated with the same cell. For example, a "UE context" may include a parameter value or data which is common for a plurality of UEs associated with the same cell.

In an embodiment of the present disclosure, the "connection relationship" may include the meaning of "access relationship", "inclusion relationship", "attachment relationship", or "matching relationship". For example, "connected" may include the meaning of "connected", "included", "attached", or "matched". In an embodiment of the present disclosure, "connection" may include the meaning of enabling data communication by wire or wirelessly. For example, "A and B are connected" may include the meaning that A and B are enabled for data communication, that is, capable of transmitting and receiving data to and from each other.

In an embodiment of the present disclosure, "setting" may include the meaning of "generating", "activating", "connecting", "establishing", or "initiating".

In an embodiment of the present disclosure, "releasing" may include the meaning of "removing", "deactivating", "suspending/stopping", or "disconnecting".

In an embodiment of the present disclosure, "A performing operation B" may include "A directly performing operation B" or "A controlling C to perform operation B". In an embodiment of the present disclosure, "A controlling operation B" may include "A directly performing operation B" or "A controlling C to perform operation B".

In an embodiment of the present disclosure, a "UE associated with a cell" may include a UE connected to the cell, a UE attached to the cell, a UE communicating (i.e., transmitting and receiving data) with an RU including the cell, a UE receiving a communication service through the cell, a UE transmitting and receiving data through the cell, a UE accessing a network through the cell, a UE included in a range of the cell (e.g., effective range, communication range), a UE requesting a radio resource of the cell, or a UE allocated a radio resource of the cell. For example, the connection of one or more UEs associated with the target cell may be configured and managed based on the cell configuration information for the target cell.

In an embodiment of the present disclosure, the "path" or "interface" may include the meaning of a module (e.g., a software module or a hardware module) that enables data transmission and reception. In an embodiment of the present disclosure, the "path" or "interface" may include the meaning of a logical or physical connection relationship. In an embodiment of the present disclosure, the "path" or "interface" may include the meaning of a data transmission/reception path. In an embodiment of the present disclosure, "configuring an interface between A and B" may include configuring A and B to transmit and receive data to and from each other and process the received data.

In an embodiment of the present disclosure, "scale-out for the DU" and "scaling-out for the DU" may include adding a new DU to a DU pool including the DU. In an embodiment of the present disclosure, "scale-out for a DU" and "scaling out for a DU" may include migrating a cell included in the DU to another DU (e.g., the newly added DU).

In an embodiment of the present disclosure, "scale-in for the DU" and "scaling-in for the DU" may include removing the DU from the DU pool. In an embodiment of the present disclosure, "scale-in for a DU" and "scaling-in for a DU" may include migrating a cell included in the DU to another DU (e.g., an existing DU).

In an embodiment of the present disclosure, the term "task" may refer to operations performed by one or more devices classified or grouped according to any criteria. For example, "task" may include each step in the process of migrating the cell. For example, the "task" may include classifying or grouping operations for cell migration based on a time point at which a failure or success is determined in the process of migrating the cell. In an embodiment of the present disclosure, a "task" may include a set of operations performed by one or more devices for a specific purpose or result. For example, the "task of migrating C from A to B" may include operations to be performed by "A" to migrate C from A to B, operations to be performed by "B", and operations to be performed by another device.

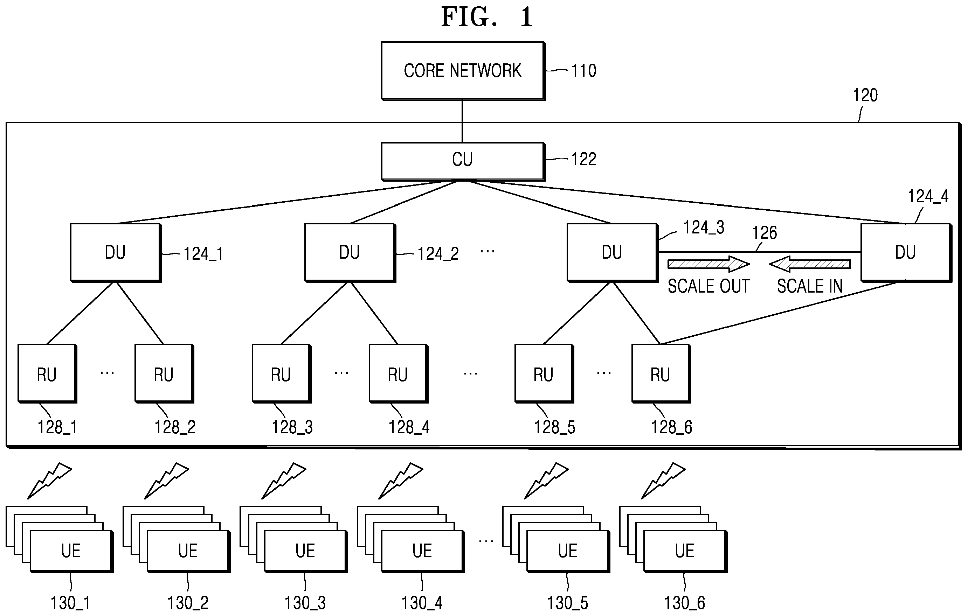

FIG. 1 is a diagram illustrating an example of a structure of a wireless communication system according to an embodiment of the present disclosure.

In an embodiment of the present disclosure, the wireless communication system may include a core network 110 and a radio access network (RAN) 120. The core network 110 includes user authentication information for each communication company, and may be a platform network that is connected by wire to servers and systems of various service companies through an optical cable.

In an embodiment of the present disclosure, the RAN 120 may include at least one radio unit (RU) 128_1, 128_2, 128_3, 128_4, 128_5, or 128_6, at least one distributed unit (DU) 124_1, 124_2, 124_3, or 124_4, and a centralized unit (CU) 122. In an embodiment of the present disclosure, the RAN 120 may include a virtualized radio access network (vRAN) system, but is not limited thereto. For example, the RAN 120 may include a 5th-generation (5G) system (5GS), a 4th-generation system (4GS), or other wireless communication systems, and may refer to a wireless communication system developed at a later time.

In an embodiment of the present disclosure, the CU 122 may be an entity that performs functions of some of the protocol layers of the network. For example, the CU 122 may be an entity that performs a network function of a radio resource control (RRC) layer and a packet data convergence protocol (PDCP) layer, but the functions that may be processed by the CU 122 are not limited to the above-described functions of the RRC layer and the PDCP layer. As an example, the CU 122 may perform a quality of service (QoS) configuration, a function of reordering packets, a security configuration and processing function, etc. For example, the CU 122 may refer to a virtualized-CU (vCU) of the vRAN system, but the present disclosure is not limited thereto.

One CU 122 may be connected to N DUs, and N may be an arbitrary integer greater than 1. The CU 122 and the DUs 124_1, 124_2, 124_3, and 124_4 may be connected through an interface. For example, the interface between the CU 122 and the DUs 124_1, 124_2, 124_3, and 124_4 may be an F1 interface (or a midhaul interface). For example, the F1 interface may include a F1-C that is an F1 interface of a control plane and a F1-U that is an F1 interface of a user plane.

The RAN 120 may include the DU 124_1, the DU 124_2, and the DU 124_3. The DU 124_1, the DU 124_2, and the DU 124_3 may perform the same function as each other, and hereinafter, the DU 124_3 will be described as an example.

In an embodiment of the present disclosure, the DU 124_3 may be an entity that performs functions of some layers among the remaining protocol layers of the network except for some layers performed by the CU 122. For example, the DU 124_3 may be an entity that performs a network function (e.g., a baseband function) of a radio link control (RLC) layer, a medium access control (MAC) layer, and a physical (PHY) layer, but a function that may be processed by the DU 124_3 is not limited to the functions of the RLC layer, the MAC layer, and the PHY layer described above. For example, the DU 124_3 may perform a buffer function, a radio resource scheduling function, a data reprocessing function, and the like. For example, the DU 124_3 may be a virtualized-DU (vDU) of the vRAN system, but the present disclosure is not limited thereto. For example, the DU 124_3 may correspond to a component module, an arbitrary processing operation unit, or a distribution unit or software that performs arbitrary processing, or the like. For example, the DU 124_3 may correspond to one server.

One DU may be connected to N RUs, and N may be an arbitrary integer greater than 1. Referring to FIG. 1, the DU 124_1 may be connected to the RUs 128_1, . . . , and 128_2, the DU 124_2 may be connected to the RUs 128_3, . . . , and 128_4, and the DU 124_3 may be connected to the RUs 128_5, . . . , and 128_6. In an embodiment of the present disclosure, the DU 124_3 and the RUs 128_5 and 128_6 may be connected through an interface. For example, an interface between the DU 124_3 and the RUs 128_5 and 128_6 may be a fronthaul interface.

The RU 128_1, the RU 128_2, the RU 128_3, the RU 128_4, the RU 128_5, and the RU 128_6 may perform the same function, and hereinafter, the RU 128_6 will be described as an example.

In an embodiment of the present disclosure, the RU 128_6 may be an entity that performs some functions other than the functions processed by the DU 124_3 among the functions of the PHY layer. For example, the DU 124_3 may perform a function of a high-PHY layer, and the RU 128_6 may perform a function of a low-PHY layer. For example, the RU 128_6 may perform a data transmission/reception function through an RF antenna.

In the existing RAN system, a DU may be connected one-to-one to a cell site including one or more RUs, and a processing capacity of the DU may be determined based on maximum traffic that may enter the cell site. According to a change in traffic flow over time, the time at which the maximum traffic occurs is limited (e.g., 17:00 to 21:00), and at other times, there may be DU resources that are not used, that is, there may be available remaining resources.

According to an embodiment of the present disclosure, a virtualized DU (vDU) pooling technology that breaks away from a 1:1 relationship between an existing DU and a cell site (a set of RUs) and pools and virtualizes the DU may be applied to the vRAN system. In this case, the number of servers required for establishing the RAN system may be reduced, and capital expenditures (CAPEX) may be reduced. In addition, power consumption may be reduced, compared to the existing RAN system, and operating expenditure (OPEX) may be reduced.

According to an embodiment of the present disclosure, a vCU pooling technology for pooling and virtualizing a CU may be applied to the vRAN system. In this case, the number of servers required for establishing the RAN system may be reduced, and capital expenditures (CAPEX) may be reduced. In addition, power consumption may be reduced compared to the existing RAN system, and operating expenditure (OPEX) may be reduced.

In an embodiment of the present disclosure, a vDU scaling method of efficiently using a server resource by dynamically scaling out or scaling in a DU according to a current traffic situation may be used in the RAN 120. In the case of scaling-out, the DU 124_4 may be newly generated in the RAN 120, but the present disclosure is not limited thereto. For example, the DU 124_4 may previously exist in the RAN 120. In the case of scaling-in, the DU 124_4 may previously exist in the RAN 120.

Hereinafter, the DU 124_3 may be referred to as the first DU 124_3, and the DU 124_4 may be referred to as the second DU 124_4. In FIG. 1, in the case of scale-out, the first DU 124_3 may correspond to a source DU, and the second DU 124_4 may correspond to a target DU. In FIG. 1, in the case of scale-in, the first DU 124_3 may correspond to a target DU, and the second DU 124_4 may correspond to a source DU. The first DU 124_3 and the second DU 124_4 may be connected via an inter DU interface (Xd interface) 126.

In an embodiment of the present disclosure, scale-out may include addition of a new DU (e.g., the second DU 124_4) to the DU pool for the CU 122. For example, when the amount of traffic to be processed by the first DU 124_3 included in the DU pool increases, the second DU 124_4 may be added to the DU pool. For example, the addition of the second DU 124_4 to the DU pool may include addition of a module corresponding to the second DU 124_4 to the DU pool. For example, the addition of the second DU 124_4 to the DU pool may include initiating an operation by an additional server capable of processing data. When the capacity or performance with which the first DU 124_3 (e.g., an existing server) is capable of processing data reaches a limit, the second DU 124_4 (as a non-limiting example, a server of a similar specification) may be added to the communication system by using scale-out. In this case, a cell in which data is processed by the first DU 124_3 may be migrated from the first DU 124_3 to the second DU 124_4 so that data of the cell may be processed by the second DU 124_4.

In an embodiment of the present disclosure, scale-in may include removal of the second DU 124_4 included in the DU pool. For example, when the amount of traffic to be processed by the DUs included in the DU pool decreases, the second DU 124_4 may be removed from the DU pool. For example, the removal of the second DU 124_4 from the DU pool may include removal of a module corresponding to the second DU 124_4. For example, the removal of the second DU 124_4 from the DU pool may include stopping the operation of the server that has been processing the data. By using scale-in, the number of servers that no longer need to operate may be reduced, and resources may be saved. For scale-in, a cell in which data is processed by the second DU 124_4 may be migrated from the second DU 124_4 to the first DU 124_3 so that data of the cell may be processed by the first DU 124_3.

According to an embodiment of the present disclosure, in addition to scaling in which the second DU 124_4 is added to or removed from the DU pool, a cell in which data is processed by the second DU 124_4 may be migrated from the second DU 124_4 to the first DU 124_3 so that data of the cell may be processed by the first DU 124_3, or a cell in which data is processed by the first DU 124_3 may be migrated from the first DU 124_3 to the second DU 124_4 so that data of the cell may be processed by the second DU 124_4. For example, a cell may be migrated from the first DU 124_3 having a large amount of traffic to the second DU 124_4 having a relatively small amount of traffic so that data of the cell may be processed by the second DU 124_4.

When each process that has been sequentially performed for the target cell migration fails during the process, it may not be possible to proceed to a next process, or all connections of a plurality of UEs associated with a target cell may be released. Although the failure occurs during the target cell migration process, all connections of the UEs may be released even when communication is resumed without performing a task of recovery to the original configuration. This is because, in a state in which an abnormal connection is performed or a connection is disconnected, when the abnormal connection is not recovered from or is not detected and MAC scheduling is resumed, a normal communication environment cannot be provided to a UE. A radio link failure (RLF) may occur due to disconnection of the UE, and the UEs may perform random access (RA), which may cause a load on other DUs, and a service quality of the communication network may deteriorate.

In an embodiment of the present disclosure, a method of determining success and failure for each step in the target cell migration process may be provided. In an embodiment of the present disclosure, a recovery method and range according to a failure of each step may be provided.

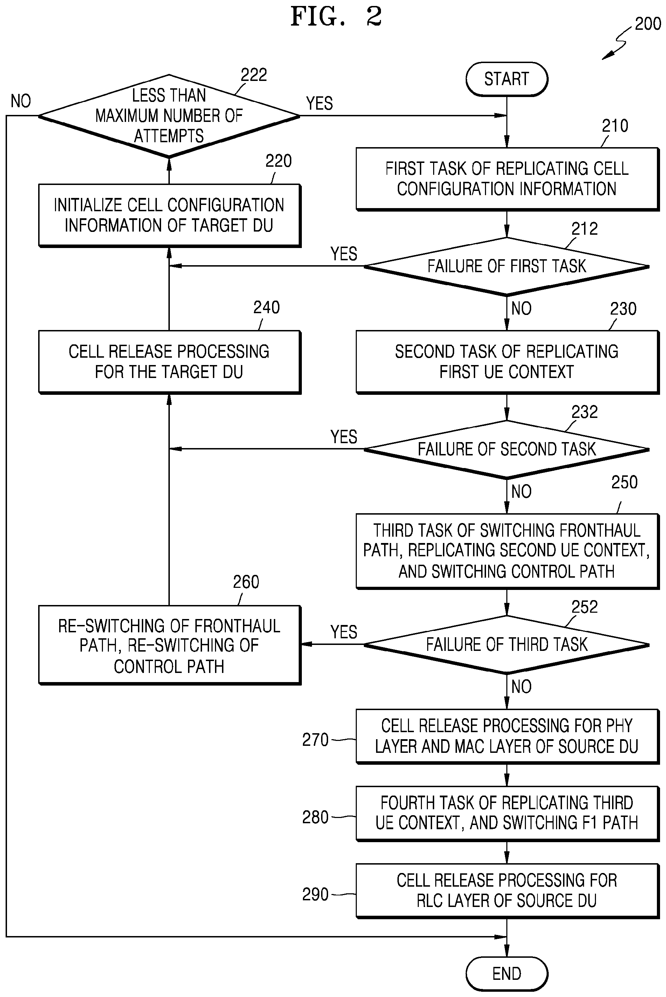

FIG. 2 is a flowchart illustrating an example of a method of migrating a cell from a source DU to a target DU, according to an embodiment of the present disclosure.

In descriptions of FIG. 2, descriptions overlapping with the above descriptions of FIG. 1 may be omitted.

FIG. 2 may illustrate an example of a method 200 by which an electronic device migrates a cell from the source DU to the target DU. The electronic device performing the method 200 corresponds to the electronic device including a cell migration module (e.g., a scaling agent module) that manages, controls, or processes cell migration, and may include a device of a source DU, a device of a target DU, and/or another separate device. For example, the source DU (or the device of the source DU) may include a cell migration module. For example, the target DU (or the device of the target DU) may include a cell migration module. For example, the other device separate from the source DU and the target DU may include a cell migration module.

Referring to FIG. 2, the method 200 according to an embodiment of the present disclosure may include operations 210 to 290. In an embodiment of the present disclosure, operations 210 to 290 of the method 200 may be performed by the cell migration module included in the electronic device. In an embodiment of the present disclosure, operations 210 to 290 of the method 200 may be performed by at least one processor included in the electronic device. The method 200 is not limited to that shown in FIG. 2, and, in one or more embodiments, may further include operations not shown in FIG. 2, or some operations may be omitted.

In an embodiment of the present disclosure, the electronic device may perform the method 200 by identifying a DU scaling (e.g., scale-out or scale-in) request (or indication) of an operations, administration, and maintenance (OAM) module. In an embodiment of the present disclosure, the electronic device may perform the method 200 by identifying a cell migration request (or indication) of the OAM module. For example, the electronic device may identify, from the OAM module, a request (or indication) of migrating a cell from the source DU (e.g., the first DU) to the target DU (e.g., the second DU). For example, the electronic device may identify, from the OAM module, a request (or indication) of migrating the target cell from the source DU.

According to an embodiment of the present disclosure, the electronic device may perform the method 200, based on determining DU scaling. In an embodiment of the present disclosure, the electronic device may perform the method 200, based on determining the cell migration. For example, the electronic device may determine a cell migration from the source DU to the target DU. For example, the electronic device may determine the migration of the target cell from the source DU.

In operation 210, the electronic device may control a first task of replicating cell configuration information for the target cell of the source DU to the target DU. In an embodiment of the present disclosure, the electronic device may migrate the cell configuration information for the target cell included in (or configured for) the source DU to the target DU. The cell configuration information for the target cell may include information about a frequency band of the target cell, a radio resource scheduling method, a common signal to be transmitted to one or more UEs associated with the target cell, and the like.

In an embodiment of the present disclosure, the electronic device may migrate the cell configuration information for the target cell included in at least one of the RLC layer, the MAC layer, or the PHY layer of the source DU to at least one of the RLC layer, the MAC layer, or the PHY layer of the target DU. For example, the electronic device may migrate the cell configuration information included in the RLC layer of the source DU to the RLC layer of the target DU. For example, the electronic device may migrate the cell configuration information included in the MAC layer of the source DU to the MAC layer of the target DU. For example, the electronic device may migrate the cell configuration information included in the PHY layer of the source DU to the PHY layer of the target DU. In an embodiment of the present disclosure, the cell configuration information included in each of the RLC layer, the MAC layer, and the PHY layer of the source DU may be different from each other, partially different from each other, or the same as each other.

In an embodiment of the present disclosure, the electronic device may migrate the target cell by configuring the target cell for the target DU by using parameters used to configure the target cell for the source DU. For example, the electronic device may generate (or configure) the cell configuration information for the target cell for the target DU by using a parameter used to generate (or configure) the cell configuration information for the target cell for the source DU.

In an embodiment of the present disclosure, the electronic device may replicate the cell configuration information itself for the target cell included in the source DU to the target DU. For example, the electronic device may control the source DU to replicate the cell configuration information for the target cell and provide the same to the target DU. For example, the cell configuration information for the target cell may be migrated, copied, or replicated from the source DU to the target DU through an inter-DU interface. For example, the electronic device may obtain the cell configuration information for the target cell from the source DU and provide the cell configuration information to the target DU.

In operation 212, the electronic device may determine whether the first task fails.

In operation 220, the electronic device may initialize the cell configuration information for the target cell of the target DU, based on determining failure of the first task. For example, the electronic device may initialize the setting value for the target cell of the target DU, based on the failure of the first task.

In an embodiment of the present disclosure, the electronic device may release (or remove) the cell configuration information for the target cell from the target DU, according to the failure of the first task. For example, when at least part of the cell configuration information for the target cell of the source DU is replicated (or copied or configured) to the target DU and the first task fails, the electronic device may remove at least part of the cell configuration information replicated to the target DU. For example, when the first task fails, the electronic device may remove information and data generated in the target DU by a task of replicating the cell configuration information for the target cell to the target DU.

In operation 230, the electronic device may control a second task of replicating one or more first UE contexts regarding the target cell of the source DU to the target DU, based on determining that the first task is successful. In an embodiment of the present disclosure, the electronic device may migrate one or more first UE contexts for the target cell included in the MAC layer of the source DU to the MAC layer of the target DU. For example, the electronic device may migrate (or copy or replicate) one or more first UE contexts for the target cell from the source DU (e.g., the MAC layer of the source DU) to the target DU (e.g., the MAC layer of the target DU).

The one or more first UE contexts for the target cell may include UE contexts for one or more UEs associated with the target cell, which are included in (or configured for) the source DU. For example, one or more first UE contexts for the target cell may include a MAC context configured for (or included in) the MAC layer of the DU. For example, one or more first UE contexts for the target cell may include UE contexts generated in (or configured for) or accumulated in the source DU (e.g., the MAC layer) until the second task.

In an embodiment of the present disclosure, the electronic device may generate (or configure) one or more first UE contexts for the target cell in the target DU (e.g., the MAC layer) by using parameters used to generate (or configure) first UE context for one or more UEs associated with the target cell in the source DU (e.g., the MAC layer).

In an embodiment of the present disclosure, the electronic device may copy (or replicate) the one or more first UE contexts regarding the target cell included in the source DU (e.g., the MAC layer) to the target DU (e.g., the MAC layer). For example, the electronic device may control the source DU to copy (or replicate) the one or more first UE contexts for the target cell included in the MAC layer and provide the same to the target DU. For example, the one or more first UE contexts for the target cell may be migrated, copied, or replicated through the inter-DU interface from the source DU to the target DU. For example, the electronic device may obtain the one or more first UE contexts regarding the target cell from the source DU and provide the same to the target DU.

In operation 232, the electronic device may determine whether the second task fails.

In operation 240, the electronic device may perform cell release processing on the target DU, based on determining failure of the second task. In an embodiment of the present disclosure, the electronic device may control the target cell to be released from the target DU, based on the failure of the second task being determined. In an embodiment of the present disclosure, the electronic device may release (or remove) at least one first UE context for the target cell replicated to (or configured) for the target DU (e.g., the MAC layer), based on the failure of the second task.

For example, when at least part of the one or more first UE contexts regarding the target cell of the source DU is replicated (or copied or configured) to the target DU and the second task fails, the electronic device may remove the replicated at least part of the one or more first UE contexts from the target DU. For example, when the second task fails, the electronic device may remove information and data generated in the target DU by the task of replicating the one or more first UE contexts to the target DU.

In an embodiment of the present disclosure, based on the failure of the second task being determined, the electronic device may initialize the cell configuration information for the target cell of the target DU in operation 220. For example, the electronic device may perform cell release processing on the target DU in operation 240, based on the failure of the second task, and then may initialize the target DU in operation 220.

In operation 250, based on determining that the second task is successful, the electronic device may control a third task of switching (or changing) the fronthaul path from the source DU to the target DU, replicating one or more second UE contexts for the target cell of the source DU to the target DU, and switching (or changing) the control path from the source DU to the target DU. In an embodiment of the present disclosure, the electronic device may switch (or change) the fronthaul path, i.e., the interface between RU-PHY, from an 'RU of target cell' - the 'PHY layer of the source DU' to an 'RU of target cell' - the 'PHY layer of the target DU'. In an embodiment of the present disclosure, the electronic device may switch (or change) the control path for each layer from the source DU to the target DU. In an embodiment of the present disclosure, the electronic device may migrate the one or more second UE contexts for the target cell included in (or configured for) the source DU to the target DU.

The one or more second UE contexts for the target cell may include UE contexts for one or more UEs associated with the target cell, which are included in (or configured for) the source DU. For example, one or more second UE contexts for the target cell may include a MAC context configured for (or included in) a MAC layer of a DU. For example, the one or more second UE contexts for the target cell may include a UE context generated in (or configured for) or accumulated in the source DU (e.g., the MAC layer) after the second task. For example, the one or more second UE contexts for the target cell may include a UE context generated in (or configured for) or accumulated in the source DU (e.g., the MAC layer) after replication (or migration) of the first UE context for the target cell.

In operation 252, the electronic device may determine whether the third task fails.

In operation 260, based on the failure of the third task being determined, the electronic device may switch (or change) back the fronthaul path for the target cell from the target DU to the source DU, or may switch (or change) back the control path for the target cell from the target DU to the source DU. In an embodiment of the present disclosure, in operation 250, when the control path for the target cell is switched from the source DU to the target DU and the third task fails, the electronic device may restore the control path for the target cell from the target DU to the source DU.

In an embodiment of the present disclosure, in operation 250, when the fronthaul path for the target cell is switched from the source DU to the target DU and the third task fails, the electronic device may restore the fronthaul path for the target cell from the target DU to the source DU. For example, when the interface between RU-PHY is switched (or changed) from the 'RU of target cell' - the 'PHY layer of the source DU' to the 'RU of target cell' - the 'PHY layer of the target DU' and the third task fails, the electronic device may switch (or change) the interface between RU-PHY from the 'RU of target cell' - the 'PHY layer of the target DU' to the 'RU of target cell' - the 'PHY layer of the source DU'.

In an embodiment of the present disclosure, after the electronic device re-switches the fronthaul path and/or the control path for the target cell, the electronic device may resume MAC scheduling of the source DU. In an embodiment of the present disclosure, after the electronic device re-switches the fronthaul path and/or the control path for the target cell, the electronic device may restart a queue of a fronthaul message that has been buffered. For example, the queue of the fronthaul message that has been buffered may be transmitted to the source DU.

In an embodiment of the present disclosure, the electronic device may perform cell release processing on the target DU in operation 240, based on the failure of the third task being determined. For example, the electronic device may release (or remove) the MAC context for the target cell replicated to (or configured for) the target DU, based on the failure of the third task. For example, the electronic device may remove at least one first UE context for the target cell and/or at least one second UE context for the target cell, which is replicated to (or configured for) the target DU (e.g., the MAC layer), based on the failure of the third task.

For example, when at least part of one or more second UE contexts regarding the target cell of the source DU is replicated (or copied or configured) to the target DU and the third task fails, the electronic device may remove the at least part of the one or more second UE contexts which is replicated from the target DU. For example, when the third task fails, the electronic device may remove information and data generated in the target DU by the task of replicating one or more second UE contexts for the target cell to the target DU.

In an embodiment of the present disclosure, the electronic device may initialize the cell configuration information for the target cell of the target DU in operation 220, based on the failure of the third task being determined. For example, the electronic device may switch the fronthaul path and/or the control path from the target DU to the source DU in operation 260, based on the failure of the third task, may perform cell release processing on target DU in operation 240, and then may initialize the cell configuration information of the target DU in operation 220.

Based on the failure of the first task, the second task, or the third task, in operation 222, the electronic device may determine whether the number of migration attempts for the target cell from the source DU to the target DU is less than the maximum number of attempts. In an embodiment of the present disclosure, when the first task, the second task, or the third task fails, the electronic device may initialize the target DU for the target cell and may determine whether the number of cell migration attempts from the source DU to the target DU is less than the maximum number of attempts, in order to determine whether to reattempt the migration of the target cell from the source DU to the target DU. The maximum number of attempts may be a preset (or predetermined) value.

In an embodiment of the present disclosure, the electronic device may determine not to reattempt the cell migration from the source DU to the target DU, based on determining that the number of migration attempts is greater than or equal to the maximum number of attempts. For example, when the number of migration attempts is not less than the maximum number of attempts, the electronic device may determine not to reattempt the migration of the target cell from the source DU to the target DU.

In an embodiment of the present disclosure, based on determining that the number of migration attempts is less than the maximum number of attempts, the electronic device may determine to reattempt the cell migration from the source DU to the target DU. For example, when the number of migration attempts is not greater than or equal to the maximum number of attempts, the electronic device may determine to reattempt the migration of the target cell from the source DU to the target DU. Accordingly, the electronic device may re-perform the method 200 as it is determined that the number of migration attempts is less than the maximum number of attempts.

In operation 270, based on the success of the third task being determined, the electronic device may control (or perform) cell release processing for the PHY layer and the MAC layer of the source DU. In an embodiment of the present disclosure, the electronic device may release the target cell with respect to the PHY layer and the MAC layer of the source DU. For example, the electronic device may remove (or release) the cell configuration information for the target cell included in (or configured for) the PHY layer and the MAC layer of the source DU. For example, the electronic device may remove (or release) the UE context (e.g., MAC context) for the target cell included in (or configured for) the PHY layer and the MAC layer of the source DU.

In an embodiment of the present disclosure, based on the success of the third task being determined, the electronic device may restart a fronthaul message queue that has been buffered. For example, when the third task is successful, the fronthaul message queue which has been buffered may be transmitted to the target DU. In an embodiment of the present disclosure, when the third task is successful, the electronic device may transmit and receive data between the RU and the PHY layer of the target DU. In an embodiment of the present disclosure, when the data of the fronthaul message queue and the RU are smoothly transmitted to the target DU, the electronic device may control (or perform) cell release processing on the PHY layer and the MAC layer of the source DU.

In operation 280, the electronic device may control a fourth task of replicating one or more third UE contexts for the target cell of the source DU to the target DU and switching one or more F1 paths for the target cell from the source DU to the target DU. In an embodiment of the present disclosure, the electronic device may migrate the third UE context for the plurality of UEs associated with the target cell from the source DU (e.g., the RLC layer) to the target DU (e.g., the RLC layer) in units of UEs. The one or more third UE contexts for the target cell may include UE context (e.g., RLC context) for one or more UEs associated with the target cell, which are included in (or configured for) the RLC layer of the source DU.

In an embodiment of the present disclosure, the electronic device may switch the F1 path for a plurality of UEs associated with the target cell from the source DU to the target DU in units of UEs. The F1 path may include a path (or interface) between the DU (e.g., the RLC layer of the DU) and the CU. The electronic device may switch, in units of UEs, the F1 path for a plurality of UEs associated with the target cell from the "RLC layer of the source DU"-"CU" to the "RLC layer of the target DU"-"CU". A plurality of F1 paths may be configured for one UE.

For example, the electronic device may migrate the third UE context of the UE group including at least one of the plurality of UEs associated with the target cell from the source DU to the target DU, and may switch the F1 path for the UE group from the source DU to the target DU. For example, the electronic device may sequentially migrate the third UE context to the plurality of UE groups and may change the F1 path. Accordingly, the electronic device may migrate the third UE context and switch the F1 path multiple times in units of UEs (i.e., for each UE group) without migrating the third UE context or switching the F1 path at one time for the plurality of UEs associated with the target cell.

Even when the fourth task for some UEs among the plurality of UEs associated with the target cell fails, the electronic device may not stop or restore the target cell migration process. For example, even when the third UE context for some UEs among the plurality of UEs associated with the target cell is not successfully migrated, or the F1 path for some UEs is not successfully switched, and thus, the communication service of some UEs is disconnected, the electronic device may not stop the target cell migration. For example, when communication services of some UEs among the plurality of UEs are disconnected, some UEs may attempt to connect to the target cell and/or another cell through a random access (RA).

In operation 290, the electronic device may control (or perform) cell release processing for the RLC layer of the source DU. In an embodiment of the present disclosure, the electronic device may release a target cell with respect to the RLC layer of the source DU. For example, the electronic device may remove (or release) the cell configuration information for the target cell included in (or configured for) the RLC layer of the source DU. For example, the electronic device may remove (or release) the UE context (e.g., RLC context) for the target cell included in (or configured for) the RLC layer of the source DU.

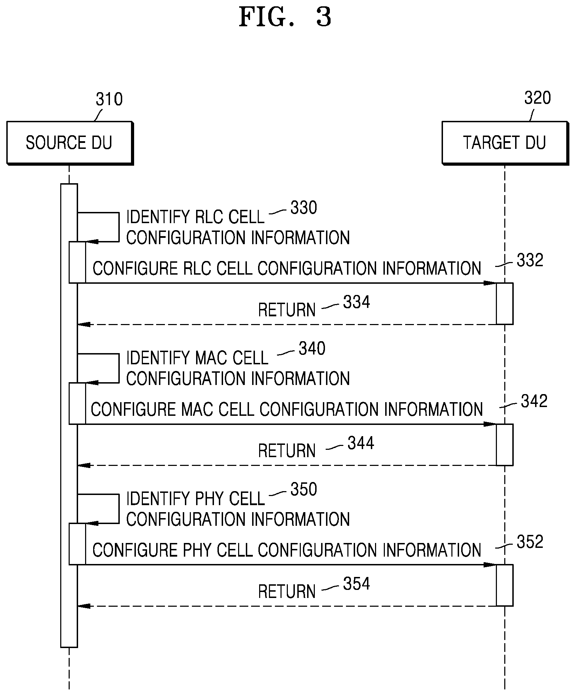

FIG. 3 is a diagram illustrating an example in which an electronic device controls a first task, according to an embodiment of the present disclosure.

In describing FIG. 3, descriptions overlapping those described above in FIG. 1 or 2 may be omitted.

In an embodiment of the present disclosure, the electronic device is an electronic device including a cell migration module (e.g., a scaling agent module) that manages, controls, or processes cell migration, and may include a device of a source DU 310, a device of a target DU 320, and/or another device. For example, the source DU 310 or the target DU 320 may include a cell migration module.

In an embodiment of the present disclosure, the electronic device may control a first task of replicating cell configuration information for a target cell of the source DU 310 to the target DU 320. For example, the cell migration module of the electronic device may control the source DU 310 and/or the target DU 320 to perform an operation for the first task. For example, the cell migration module of the electronic device may transmit a request, an indication, a message, an instruction, data, and/or information to the source DU 310 and/or the target DU 320 to perform an operation for the first task.

In an embodiment of the present disclosure, the electronic device (e.g., the cell migration module) may replicate, to the RLC layer of the target DU 320, cell configuration information for a target cell included in (or configured for) the RLC layer of the source DU 310. For example, the electronic device may migrate cell configuration information for a target cell of an RLC layer of the source DU 310 to the target DU 320. For example, the cell migration module of the electronic device may control the source DU 310 and/or the target DU 320 to replicate, to the RLC layer of the target DU 320, the cell configuration information for the target cell included in (or configured for) the RLC layer of the source DU 310.

Referring to FIG. 3, the source DU 310 may identify (or obtain) the cell configuration information (i.e., RLC cell configuration information) for the target cell of the RLC layer (330). The source DU 310 may configure (or replicate), in the target DU 320, the RLC cell configuration information configured for the source DU 310 (332). For example, the source DU 310 may provide the target DU 320 with information, a parameter, or data for configuring (or replicating or migrating) the RLC cell configuration information. For example, the source DU 310 may transmit, to the target DU 320, a message, an instruction, data, and/or information for requesting (or indicating, instructing) configuration of RLC cell configuration information. The target DU 320 may provide the source DU 310 with a response 334 as to whether the configuration (or replication or migration) of the RLC cell configuration information is completed (or succeeded).

For example, when the RLC cell configuration information is successfully configured for the target DU 320, the target DU 320 may provide the source DU 310 with a response indicating completion (or success) of configuration (or replication or migration) of the RLC cell configuration information. For example, when the RLC cell configuration information is not successfully configured for the target DU 320, the target DU 320 may provide the source DU 310 with a response indicating that the configuration (or replication or migration) of the RLC cell configuration information is not completed (or failed).

In an embodiment of the present disclosure, the electronic device may identify the response indicating the completion (or success) of configuration of the RLC cell configuration information for the target DU 320 or the response indicating the incompletion (or failure) of the configuration. For example, the electronic device may identify a response indicating completion (or success) or incompletion (or failure) of replication (or configuration or migration) of the RLC cell configuration information to the target DU 320. For example, the electronic device may receive, from the source DU 310 or the target DU 320, the response indicating the configuration completion (or success) or the configuration incompletion (or failure) of the RLC cell configuration information.

In an embodiment of the present disclosure, the electronic device (e.g., the cell migration module) may replicate cell configuration information for a target cell included in (or configured for) the MAC layer of the source DU 310 to the MAC layer of the target DU 320. For example, the electronic device may migrate the cell configuration information for the target cell of the MAC layer of the source DU 310 to the target DU 320. For example, the cell migration module of the electronic device may control the source DU 310 and/or the target DU 320 to replicate the cell configuration information for the target cell included in (or configured for) the MAC layer of the source DU 310 to the MAC layer of the target DU 320.

Referring to FIG. 3, the source DU 310 may identify (or obtain) cell configuration information (i.e., MAC cell configuration information) for the target cell of the MAC layer (340). The source DU 310 may configure (or replicate) the MAC cell configuration information configured for the source DU 310 to the target DU 320 (342). For example, the source DU 310 may provide the target DU 320 with information, parameters, or data for configuring (or replicating or migrating) the MAC cell configuration information. For example, the source DU 310 may transmit, to the target DU 320, a message, an instruction, data, and/or information for requesting (or indicating, instructing) the configuration of the MAC cell configuration information. The target DU 320 may provide the source DU 310 with a response 344 as to whether the configuration (or replication or migration) of the MAC cell configuration information is completed (or succeeded).

For example, when the MAC cell configuration information is successfully configured for the target DU 320, the target DU 320 may provide the source DU 310 with a response indicating the completion (or success) of the configuration (or replication or migration) of the MAC cell configuration information. For example, when the MAC cell configuration information is not successfully configured for the target DU 320, the target DU 320 may provide the source DU 310 with a response indicating that the configuration (or replication or migration) of the MAC cell configuration information is not completed (or failed).

In an embodiment of the present disclosure, the electronic device may identify the response indicating the completion (or success) of configuration of the MAC cell configuration information for the target DU 320 or the response indicating the incompletion (or failure) of the configuration. For example, the electronic device may identify the response indicating completion (or success) or incompletion (or failure) of replication (or configuration or migration) of the MAC cell configuration information to the target DU 320. For example, the electronic device may receive, from the source DU 310 or the target DU 320, the response indicating that the configuration of the MAC cell configuration information is completed (or succeeded) or is not completed (or failed).

According to an embodiment of the present disclosure, the electronic device (e.g., the cell migration module) may replicate cell configuration information for a target cell included in (or configured for) the PHY layer of the source DU 310 to the PHY layer of the target DU 320. For example, the electronic device may migrate cell configuration information for the target cell of the PHY layer of the source DU 310 to the target DU 320. For example, the cell migration module of the electronic device may control the source DU 310 and/or the target DU 320 to replicate the cell configuration information for the target cell included in (or configured for) the PHY layer of the source DU 310 to the PHY layer of the target DU 320.

Referring to FIG. 3, the source DU 310 may identify (or obtain) the cell configuration information (i.e., PHY cell configuration information) for the target cell of the PHY layer (350). The source DU 310 may configure (or replicate) the PHY cell configuration information configured for the source DU 310 to the target DU 320 (352). For example, the source DU 310 may provide the target DU 320 with information, parameters, or data for configuring (or replicating or migrating) the PHY cell configuration information. For example, the source DU 310 may transmit, to the target DU 320, a message, an instruction, data, and/or information requesting (or indicating, instructing) the configuration of the PHY cell configuration information. The target DU 320 may provide the source DU 310 with a response 354 as to whether the configuration (or replication or migration) of the PHY cell configuration information is completed (or successful).

For example, when the PHY cell configuration information is successfully configured for the target DU 320, the target DU 320 may provide the source DU 310 with the response indicating the completion (or success) of the configuration (or replication or migration) of the PHY cell configuration information. For example, when the PHY cell configuration information is not successfully configured for the target DU 320, the target DU 320 may provide the source DU 310 with the response indicating that the configuration (or replication or migration) of the PHY cell configuration information is not completed (or failed).

According to an embodiment of the present disclosure, the electronic device may identify the response indicating the completion (or success) of the configuration of the PHY cell configuration information for the target DU 320 or the response indicating the incompletion (or failure) of the configuration. For example, the electronic device may identify the response indicating the completion (or success) or the incompletion (or failure) of the replication (or configuration, migration) of the PHY cell configuration information to the target DU 320. For example, the electronic device may receive the response indicating the configuration completion (or success) or the configuration incompletion (or failure) of the PHY cell configuration information from the source DU 310 or the target DU 320.

In an embodiment of the present disclosure, the electronic device (e.g., the cell migration module) may identify (or determine) whether the first task has failed (i.e., whether the first task has succeeded). For example, the electronic device may identify (or determine) whether the first task has failed according to an identified (or received) response to whether configuration for each of the RLC layer, the MAC layer, and the PHY layer is completed (or succeeded).

For example, when a configuration completion (or success) response for at least one layer of the RLC layer, the MAC layer, or the PHY layer is not identified (or received), the electronic device may determine that the first task has failed. For example, when a configuration incompletion response for at least one layer of the RLC layer, the MAC layer, or the PHY layer is identified (or received), the electronic device may determine that the first task has failed. For example, when the number of identified (or received) configuration completion responses is less than a predetermined reference number (e.g., 3), the electronic device may determine that the first task has failed.

FIG. 3 illustrates an example in which cell configuration information for a target cell is migrated in the order of the RLC layer, the MAC layer, and the PHY layer, but the present disclosure is not limited thereto. For example, the electronic device may migrate the cell configuration information for the target cell in a different order. For example, the electronic device may arbitrarily migrate cell configuration information for the target cell. For example, the electronic device may migrate the cell configuration information for the target cell simultaneously, independently, or in parallel to each of the RLC layer, the MAC layer, and the PHY layer.

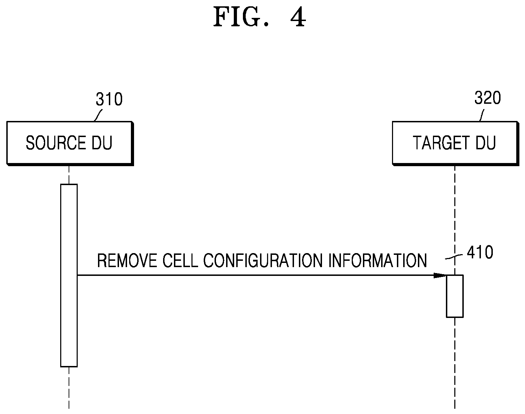

FIG. 4 is a diagram illustrating an example of removing cell configuration information from a target DU according to a failure of a first task, according to an embodiment of the present disclosure.

In describing FIG. 4, any descriptions overlapping with the above descriptions in any one of FIGS. 1 to 3 may be omitted.

The electronic device (e.g., the cell migration module) may initialize the target DU 320 for the target cell, based on the failure of the first task. In an embodiment of the present disclosure, as the failure of the first task is identified (or determined), the electronic device may initialize (or remove or release) the cell configuration information for the target cell from the target DU 320. For example, the electronic device may remove the cell configuration information for the target cell from at least one of the RLC layer, the MAC layer, or the PHY layer of the target DU 320.

In an embodiment of the present disclosure, the cell migration module of the electronic device may control the source DU 310 and/or the target DU 320 to remove the cell configuration information for the target cell from the target DU 320. For example, the electronic device may transmit a request, an instruction, a message, an instruction, data, and/or information to the source DU 310 and/or the target DU 320 to perform an operation of releasing the cell configuration information for the target cell of the target DU 320. For example, the electronic device may transmit, to the target DU 320, a message, an instruction, data, and/or information for requesting (or indicating, instructing) the release of the cell configuration information for the target cell, such that the target DU 320 may remove (or delete) the cell configuration information for the target cell. For example, the electronic device may allow the source DU 310 to transmit, to the target DU 320, a message, an instruction, data, and/or information for requesting (or indicating, instructing) release of the cell configuration information for the target cell.

Referring to FIG. 4, the source DU 310 may remove cell configuration information for a target cell from the target DU 320 (410). For example, the source DU 310 may provide a message, an instruction, data, and/or information for requesting (or indicating, instructing) removal of cell configuration information for the target cell of the target DU 320. The target DU 320 may remove the cell configuration information for the target cell, according to a message, a command, data, and/or information for requesting (or indicating, instructing) the removal of the cell configuration information for the target cell from the source DU 310 (or the electronic device). As there is no separate path change or scheduling suspension, the target DU may be initialized by releasing the RLC cell configuration information, the MAC cell configuration information, and/or the PHY cell configuration information configured for the target DU 320.

According to an embodiment of the present disclosure, operations according to the failure of the first task are not limited to those illustrated in FIG. 4. For example, operations not illustrated in FIG. 4 may be further performed according to the failure of the first task.

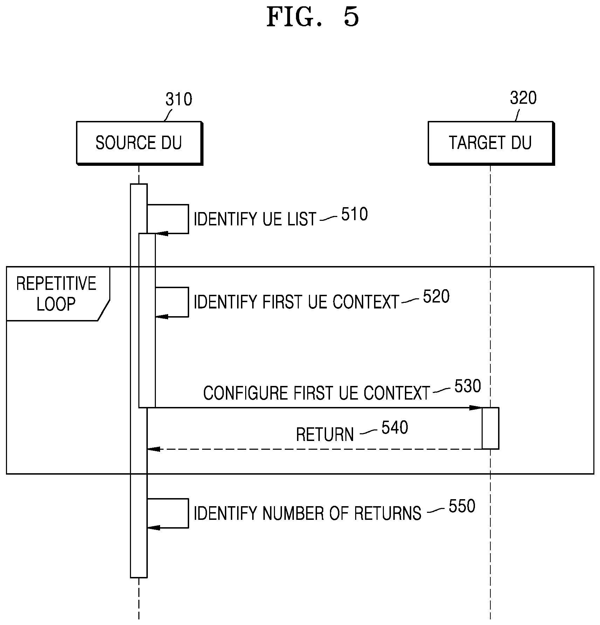

FIG. 5 is a diagram illustrating an example in which an electronic device controls a second task, according to an embodiment of the present disclosure.

In describing FIG. 5, any descriptions overlapping with the above descriptions in any one of FIGS. 1 to 4 may be omitted.

In an embodiment of the present disclosure, when the first task is successful, the electronic device may control a second task of replicating one or more first UE contexts for the target cell of the source DU 310 to the target DU 320. For example, the cell migration module of the electronic device may control the source DU 310 and/or the target DU 320 to perform an operation for the second task. For example, the cell migration module of the electronic device may transmit a request, an instruction, a message, an instruction, data, and/or information to the source DU 310 and/or the target DU 320 to perform an operation for the first task.

In an embodiment of the present disclosure, the electronic device (e.g., the cell migration module) may replicate one or more first UE contexts (e.g., MAC contexts) for the target cell included in (or configured for) the MAC layer of the source DU 310 to the MAC layer of the target DU 320. For example, the electronic device may migrate the one or more first UE contexts for the target cell from the MAC layer of the source DU 310 to the MAC layer of the target DU 320. For example, the cell migration module of the electronic device may control the source DU 310 and/or the target DU 320, such that the one or more first UE contexts for the target cell included in (or configured for) the MAC layer of the source DU 310 may be replicated to the MAC layer of the target DU 320.

In an embodiment of the present disclosure, the electronic device may identify a response indicating completion (or success) of configuration or a response indicating incompletion (or failure) of configuration of the one or more first UE contexts for the target DU 320. For example, the electronic device may identify the response indicating completion (or success) of replication (or migration) of the one or more first UE contexts to the target DU 320 or the response indicating incomplete configuration (or failure). For example, the electronic device may receive, from the source DU 310 or the target DU 320, the response indicating the configuration completion (or success) or the configuration incompletion (or failure) of the one or more first UE contexts for the target DU 320.

Referring to FIG. 5, the source DU 310 may identify (or obtain) a UE list associated with a target cell (510). For example, the source DU 310 may identify a plurality of UEs associated with the target cell. The source DU 310 may identify (or obtain) a first UE context for each of the plurality of UEs (520), and may configure the same for the target DU 320 (530). The target DU 320 may provide the source DU 310 with a response (e.g., return) 540 to each of the plurality of UEs as to whether the configuration (or replication or migration) of the first UE context is completed (or successful).

For example, when the first UE context is successfully configured for the target DU 320, the target DU 320 may provide the source DU 310 with the response indicating the completion (or success) of the configuration (or replication or migration) of the first UE context for the target DU 320. For example, when the first UE context is not successfully configured for the target DU 320, the target DU 320 may provide the source DU 310 with a response indicating that the configuration (or replication, migration) of the first UE context for the target DU 320 is incomplete (or fails).

As shown, identification 520, configuration 530, and response 540 with respect to the first UE context may be performed in a repetitive loop form for each of the plurality of UEs. For example, the identification of the first UE context 520, the configuration of the first UE context 530, and the response 540 may be sequentially performed for each of the plurality of UEs, but the present disclosure is not limited thereto. For example, the identification 520, the configuration 530, and the response 540 of the first UE context may be performed simultaneously, independently, or in parallel for each of the plurality of UEs.

In an embodiment of the present disclosure, the electronic device (e.g., the cell migration module) may identify (or determine) whether the second task has failed (i.e., whether the second task has succeeded). For example, the electronic device may identify (or determine) whether the second task fails according to the response 540 as to whether the configuration (or replication or migration) of the identified (or received) first UE context is completed (or succeeded).

In an embodiment of the present disclosure, the electronic device may identify (or determine) the failure of the second task based on the number of replication completion responses of the one or more first UE contexts for the target cell being less than (or less than or equal to) a reference number of responses. For example, when the number of replication completion responses of the first UE context for each UE is less than (or less than) the reference number of responses, the electronic device may determine that the second task has failed.

In an embodiment of the present disclosure, the electronic device may identify the failure of the second task, based on the ratio of the number of replication completion responses of the first UE context to the number of a plurality of UEs (e.g., UEs included in the UE list) associated with the target cell being less than or equal to (or less than) a reference ratio. For example, when the ratio of the number of replication completion responses of the first UE context to the number of the plurality of UEs is equal to or less than (or less than) the reference ratio (e.g., 0.5%), the electronic device may determine that the second task has failed.

Referring to FIG. 5, the source DU 310 may identify the number of returns indicating the completion (or success) of the configuration (or replication or migration) of the first UE context for the target cell (550). When the number of identified returns is less than (or equal to or less than) the reference number of responses, the source DU 310 (or the electronic device) may determine that the second task has failed. When the identified number of returns is greater than or equal to (or exceeds) the reference number of responses, the source DU 310 (or the electronic device) may determine that the second task is successful.

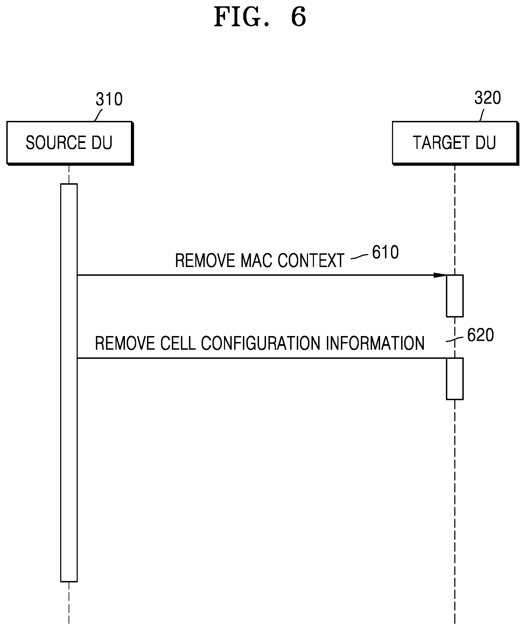

FIG. 6 is a diagram illustrating an example of removing MAC context and cell configuration information from a target DU according to a failure of a second task, according to an embodiment of the present disclosure.

In describing FIG. 6, any descriptions overlapping with the above descriptions in any one of FIGS. 1 to 5 may be omitted. FIG. 6 may illustrate an example in which the electronic device (e.g., the cell migration module) initializes the target DU 320 for the target cell, based on the failure of the second task.

In an embodiment of the present disclosure, based on the failure of the second task being identified (or determined), the electronic device may remove (or release) at least one first UE context for the target cell from the target DU 320. For example, the electronic device may remove (or release) at least one first UE context (e.g., MAC context) for the target cell from the MAC layer of the target DU 320.

In an embodiment of the present disclosure, the cell migration module of the electronic device may control the source DU 310 and/or the target DU 320 to remove at least one first UE context for the target cell from the target DU 320. For example, the electronic device may transmit a request, an instruction, a message, an instruction, data, and/or information to the source DU 310 and/or the target DU 320 to perform an operation of releasing at least one first UE context. For example, the electronic device may transmit, to the target DU 320, a message, an instruction, data, and/or information for requesting (or indicating, instructing) release of at least one first UE context for the target cell, so that the target DU 320 may remove (or remove) the at least one first UE context. For example, the electronic device may allow the source DU 310 to transmit, to the target DU 320, a message, an instruction, data, and/or information requesting (or indicating, instructing) release of at least one first UE context.

In an embodiment of the present disclosure, based on the failure of the second task being identified (or determined), the electronic device may remove (or release) the cell configuration information for the target cell from the target DU 320. For example, when the second task fails, the electronic device may remove the MAC context for the target cell from the target DU 320 and may remove (or release) the cell configuration information for the target cell.

Referring to FIG. 6, the source DU 310 may remove a MAC context (e.g., at least one first UE context) for a target cell from the target DU 320 (610). For example, the source DU 310 may provide the target DU 320 with a message, an instruction, data, and/or information for requesting (or indicating, instructing) removal of at least one first UE context for the target cell. The target DU 320 may remove the MAC context for the target cell, according to a message, an instruction, data, and/or information for requesting (or indicating or instructing) the removal of the MAC context for the target cell from the source DU 310 (or the electronic device).

Referring to FIG. 6, the source DU 310 may remove the cell configuration information for the target cell from the target DU 320 (620) after the MAC context is removed (610). For example, the source DU 310 may provide the target DU 320 with a message, an instruction, data, and/or information for requesting (or indicating, instructing) removal of the cell configuration information for the target cell. The target DU 320 may remove the cell configuration information for the target cell, according to a message, an instruction, data, and/or information for requesting (or indicating, instructing) the removal of the cell configuration information for the target cell from the source DU 310 (or the electronic device).

FIG. 6 illustrates an example of removing the cell configuration information (620) after removing the MAC context (610), but the present invention is not limited thereto. For example, the electronic device may perform removal of the MAC context and removal of the cell configuration information simultaneously, independently, or in parallel. For example, the electronic device may remove the MAC context after removing the cell configuration information for the target cell.

According to an embodiment of the present disclosure, operations according to the failure of the second task are not limited to those illustrated in FIG. 6. For example, operations not illustrated in FIG. 6 may be further performed or some operations illustrated in FIG. 6 may be omitted according to the failure of the second task.

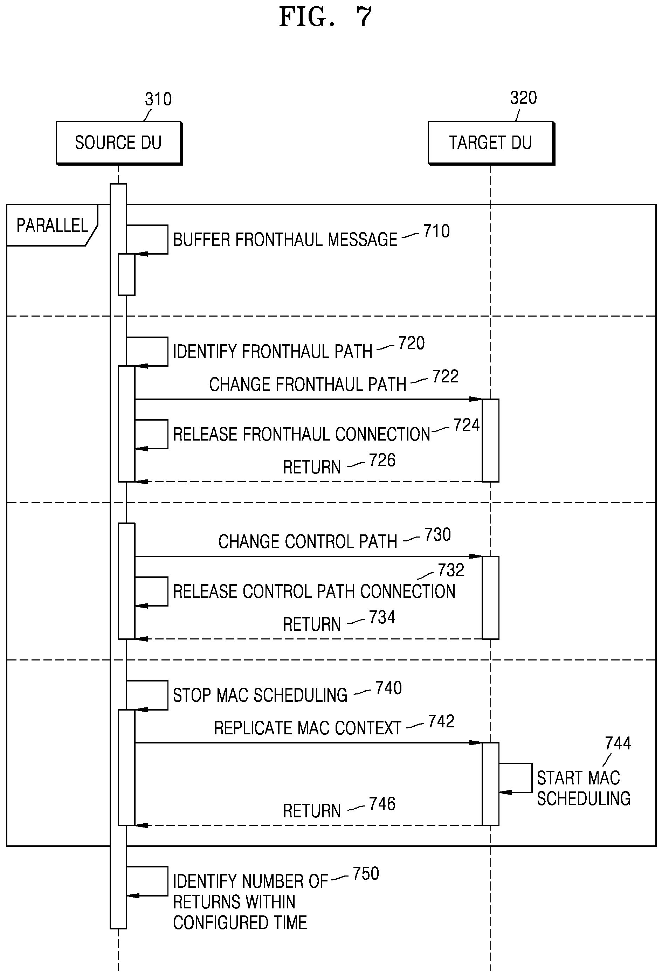

FIG. 7 is a diagram illustrating an example in which an electronic device controls a third task, according to an embodiment of the present disclosure.

In describing FIG. 7, any descriptions overlapping with the above descriptions in any one of FIGS. 1 to 6 may be omitted.

In an embodiment of the present disclosure, when the second task is successful, the electronic device may control the third task of switching (or changing) the fronthaul path from the source DU 310 to the target DU 320, replicating (or configuring) one or more second UE contexts for the target cell of the source DU 310 to the target DU 320, and changing the control path (e.g., the control path of the PHY layer and/or the MAC layer) from the source DU 310 to the target DU 320. For example, the cell migration module of the electronic device may control the source DU 310 and/or the target DU 320 to perform an operation for the third task. For example, the cell migration module of the electronic device may transmit a request, an indication, a message, an instruction, data, and/or information to the source DU 310 and/or the target DU 320 to perform an operation for the third task.

In an embodiment of the present disclosure, the electronic device may buffer a fronthaul message for the source DU 310. For example, the electronic device may buffer the fronthaul message for the target cell of the source DU 310. For example, the electronic device may pause fronthaul message queue transmission for the target cell of the source DU 310.

In an embodiment of the present disclosure, the electronic device may switch the fronthaul path from the source DU 310 to the target DU 320. For example, the cell migration module of the electronic device may control the source DU 310 and/or the target DU 320 to change the fronthaul path from the source DU 310 to the target DU 320. In an embodiment of the present disclosure, the electronic device may replicate one or more second UE contexts (e.g., MAC contexts) for the target cell of the source DU 310 to the target DU 320. For example, the cell migration module of the electronic device may control the source DU 310 and/or the target DU 320 to configure (or migrate, replicate) one or more second UE contexts for the target cell of the source DU 310 to the target DU 320. In an embodiment of the present disclosure, the electronic device may change the control path from the source DU 310 to the target DU 320. For example, the cell migration module of the electronic device may control the source DU 310 and/or the target DU 320 to change the control path from the source DU 310 to the target DU 320.

Referring to FIG. 7, the source DU 310 may buffer a fronthaul message for the source DU 310 (710). For example, the source DU 310 may request a module (e.g., a fronthaul message handler module or a fronthaul splitter module) for managing the fronthaul message to buffer the fronthaul message.

Referring to FIG. 7, the source DU 310 may identify a fronthaul path for a target cell (720), and may change the fronthaul path for the target cell to the target DU 320 (722). For example, the source DU 310 may provide the target DU 320 with data, parameters, or information for configuring the fronthaul path for the target cell. For example, the source DU 310 may transmit a message, an instruction, data, and/or information for requesting (or indicating, instructing) the establishment of the fronthaul path for the target cell.

The target DU 320 may perform an operation of configuring a fronthaul path for the target cell. The source DU 310 may release the fronthaul connection to the target cell (724). For example, while the target DU 320 configures the fronthaul path for the target cell, the source DU 310 may release the fronthaul connection to the target cell. The target DU 320 may provide the source DU 310 with a response (e.g., return) 726 indicating the completion (or success) of the configuration of the fronthaul path for the target cell.

Referring to FIG. 7, the source DU 310 may change the control path for the target cell to the target DU 320 (730). For example, the source DU 310 may provide the target DU 320 with data, parameters, or information for control path configuration for the target cell. For example, the source DU 310 may transmit a message, an instruction, data, and/or information for requesting (or indicating, instructing) the control path configuration for the target cell.

The target DU 320 may perform an operation of configuring a control path for the target cell. The source DU 310 may release the control path connection to the target cell (732). For example, while the target DU 320 configures the control path for the target cell, the source DU 310 may release the control path connection for the target cell. The target DU 320 may provide the source DU 310 with a response (e.g., return) 734 indicating the completion (or success) of configuring the control path for the target cell.

Referring to FIG. 7, before replication (or migration) of one or more second UE contexts (e.g., MAC contexts) for the target cell, the source DU 310 may stop MAC scheduling for the target cell (740). The source DU 310 may replicate (or migrate, configure) the one or more second UE contexts for the target cell to the target DU 320 (742). The one or more second UE contexts for the target cell may include UE contexts generated or accumulated in the MAC layer of the source DU 310 after replication (or migration) of the first UE context and before the MAC scheduling is stopped.

For example, the source DU 310 may provide data, parameters, or information to the target DU 320 for configuration of one or more second UE contexts for the target cell. For example, the source DU 310 may transmit a message, an instruction, data, and/or information requesting (or indicating, instructing) configuration of the one or more second UE contexts for the target cell.

The target DU 320 may perform an operation of configuring the one or more second UE contexts for the target cell for the target DU 320. The target DU 320 may start (or initiate) MAC scheduling for the target cell as the one or more second UE contexts for the target cell are configured (or replicated) (744). The target DU 320 may provide the source DU 310 with the response (e.g., return) 746 indicating the completion (or success) of the configuration of the one or more second UE contexts for the target cell.

In an embodiment of the present disclosure, the electronic device may identify the number of completion responses for the third task. For example, the electronic device may identify the number of completion responses for the third task within a predetermined time (e.g., a configured time). For example, the electronic device may start a timer of a predetermined time when the third task starts, and may identify the number of completion responses for the third task when the timer expires. In an embodiment of the present disclosure, the electronic device may identify the number of completion responses for the third task received from the target DU 320.

For example, the predetermined time for the third task may be a short time during which a user of the UE is not able to recognize a disconnection from the communication system. For example, the predetermined time may be a short time during which the connection between the target cell and the UE is not released. For example, the predetermined time may be a time (e.g., 5 ms) set by a mobile communication provider.

In an embodiment of the present disclosure, the electronic device may identify (or determine) the failure of the third task, based on the number of completion responses identified within a predetermined time being less than (or equal to or less than) a predetermined number. For example, the predetermined number may be determined in advance according to the number of sub-tasks included in the third task. For example, the predetermined number may be determined according to the number of sub-tasks changed or replicated from the source DU to the target DU.

For example, the third task may include a first sub-task of switching (or changing) the fronthaul path from the source DU 310 to the target DU 320, a second sub-task of changing the control path from the source DU 310 to the target DU 320, and a third sub-task of replicating (or configuring) one or more second UE contexts for the target cell of the source DU 310 to the target DU 320. In this case, the predetermined number may be 3.

Referring to FIG. 7, the source DU 310 may identify the number of completion responses (e.g., returns) within a set time (750). For example, source DU 310 may determine that the third task has failed when the number of completion responses from the target DU 320 is less than 3. For example, when the number of completion responses from the target DU 320 is 3, the source DU 310 may determine that the third task is successful.

FIG. 7 illustrates an example in which a first sub-task, a second sub-task, and a third sub-task are performed in parallel, but the present disclosure is not limited thereto. For example, the first sub-task, the second sub-task, and/or the third sub-task may be performed in a predetermined order.

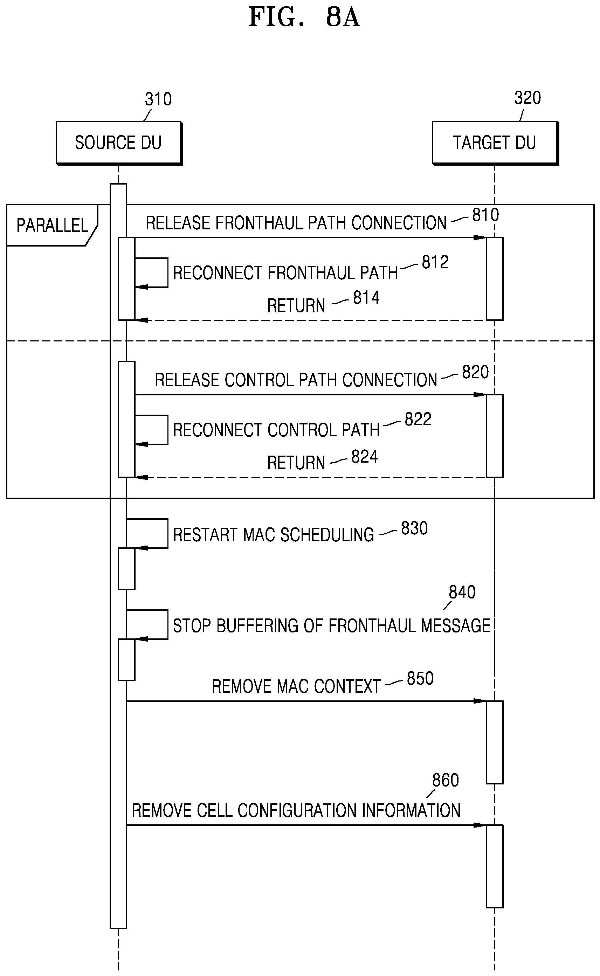

FIG. 8A is a diagram illustrating an example of re-changing a fronthaul path and a control path according to a failure of a third task and removing MAC context and cell configuration information from a target DU, according to an embodiment of the present disclosure.

In describing FIG. 8A, any descriptions overlapping with the above descriptions in any one of FIGS. 1 to 7 may be omitted. FIG. 8A may illustrate an example in which the electronic device (e.g., the cell migration module) initializes the target DU 320 with respect to the target cell, based on the failure of the third task.

In an embodiment of the present disclosure, based on the failure of the third task being identified (or determined), the electronic device may re-switch the fronthaul path for the target cell from the target DU 320 to the source DU 310. For example, the electronic device may change from the RU-target DU 320 back to the RU-source DU 310. For example, the electronic device may release the fronthaul path for the target cell between the PHY layer of the target DU 320 and the RU, and may configure the fronthaul path for the target cell between the PHY layer of the source DU 310 and the RU.

In an embodiment of the present disclosure, the cell migration module of the electronic device may control the source DU 310 and/or the target DU 320 to change the fronthaul path for the target cell from the source DU 310 to the target DU 320. For example, the electronic device may transmit a request, an instruction, a message, an instruction, data, and/or information to the source DU 310 and/or the target DU 320 to perform an operation of changing the fronthaul path for the target cell.

For example, the electronic device may control the target DU 320 to release the fronthaul path for the target cell by transmitting, to the target DU 320, a message, an instruction, data, or information for requesting (or indicating, instructing) to release the fronthaul path for the target cell. For example, the electronic device may control the source DU 310 to configure (or generate) the fronthaul path for the target cell by transmitting, to the source DU 310, a message, an instruction, data, or information for requesting (or indicating, instructing) configuration of the fronthaul path for the target cell. Accordingly, the fronthaul path (or interface) between the PHY layer of the target DU 320 and the RU for the target cell may be released, and the fronthaul path (or interface) between the PHY layer of the source DU 310 and the RU for the target cell may be reconfigured.

In an embodiment of the present disclosure, as the failure of the third task is identified (or determined), the electronic device may re-switch the control path for the target cell from the target DU 320 to the source DU 310. For example, the electronic device may change from the RU-target DU 320 back to the RU-source DU 310. For example, the electronic device may release the fronthaul path for the target cell between the PHY layer of the target DU 320 and the RU, and may configure the fronthaul path for the target cell between the PHY layer of the source DU 310 and the RU.

In an embodiment of the present disclosure, the cell migration module of the electronic device may control the source DU 310 and/or the target DU 320 to change the fronthaul path for the target cell from the target DU 320 to the source DU 310. For example, the electronic device may transmit a request, an instruction, a message, an instruction, data, and/or information to the source DU 310 and/or the target DU 320 to perform an operation of changing the control path for the target cell.

For example, the electronic device may control the target DU 320 to release the control path for the target cell by transmitting, to the target DU 320, a message, an instruction, data, or information for requesting (or indicating, instructing) the release of the control path for the target cell. For example, the electronic device may control the source DU 310 to configure (or generate) the control path for the target cell by transmitting, to the source DU 310, a message, an instruction, data, or information for requesting (or indicating, instructing) the configuration of the control path for the target cell. Accordingly, the control path (or interface) between the PHY layer of the target DU 320 and the RU for the target cell may be released, and the control path (or interface) between the PHY layer of the source DU 310 and the RU for the target cell may be reconfigured.

In an embodiment of the present disclosure, as the fronthaul and the control path are changed (or configured) to the source DU 310, the electronic device may restart the MAC scheduling for the target cell of the source DU 310. For example, the electronic device may transmit, to the source DU 310, a message, an instruction, data, or information for requesting (or indicating, instructing) the start of MAC scheduling for the target cell, such that the source DU 310 may start MAC scheduling for the target cell.

In an embodiment of the present disclosure, as the fronthaul and the control path are changed to (or configured for) the source DU 310, the electronic device may stop buffering of the fronthaul message for the target cell of the source DU 310. For example, the electronic device may stop buffering of the fronthaul message for the target cell of the source DU 310 by transmitting a message, an instruction, data, or information for requesting (or indicating, instructing) the source DU 310 to stop buffering of the fronthaul message for the target cell to the source DU 310 or a fronthaul message management module (e.g., a fronthaul message handler or a fronthaul splitter).

In an embodiment of the present disclosure, as the failure of the third task being identified (or determined), the electronic device may remove (or release) at least one first UE context for the target cell and/or at least one second UE context for the target cell from the target DU 320. For example, the electronic device may remove the UE context (e.g., MAC context) configured for (or included in) the target cell from the MAC layer of the target DU 320.

In an embodiment of the present disclosure, the electronic device may control the source DU 310 and/or the target DU 320 to remove the MAC context (e.g., at least one first UE context and/or at least one second UE context) for the target cell from the target DU 320. For example, the electronic device may transmit, to the target DU 320, a message, an instruction, data, and/or information for requesting (or indicating, instructing) release of the MAC context for the target cell, such that the target DU 320 may remove (or delete) the MAC context for the target cell. For example, the electronic device may allow the source DU 310 to transmit, to the target DU 320, a message, an instruction, data, and/or information for requesting (or indicating, instructing) the release of the MAC context for the target cell.

In an embodiment of the present disclosure, as the failure of the third task is identified (or determined), the electronic device may remove (or release) the cell configuration information for the target cell from the target DU 320. For example, the electronic device may remove the cell configuration information for the target cell from each of the RLC layer, the MAC layer, and the PHY layer of the target DU 320.

Referring to FIG. 8A, the source DU 310 may release the fronthaul path connection to the target cell of the target DU 320 (810). For example, the source DU 310 may provide the target DU 320 with a message, an instruction, data, and/or information for requesting (or indicating or instructing) the release of the fronthaul path connection to the target cell, and the target DU 320 may release the fronthaul path connection to the target cell. The source DU 310 may perform an operation of reconnecting (or reconfiguring) the fronthaul path for the target cell (812). For example, while the target DU 320 releases the fronthaul path connection to the target cell, the source DU 310 may reconnect the fronthaul path to the target cell. The target DU 320 may provide the source DU 310 with a response 814 indicating the completion (or success) of the release of the fronthaul path for the target cell.

Referring to FIG. 8A, the source DU 310 may release the control path connection to the target cell of the target DU 320 (820). For example, the source DU 310 may provide the target DU 320 with a message, an instruction, data, and/or information for requesting (or indicating or instructing) the release of the control path connection to the target cell, and the target DU 320 may release the control path connection to the target cell. The source DU 310 may perform an operation of reconnecting (or reconfiguring) a control path for the target cell (822). For example, while the target DU 320 releases the control path connection to the target cell, the source DU 310 may reconnect the control path for the target cell. The target DU 320 may provide the source DU 310 with a response 824 indicating the completion (or success) of the release of the control path for the target cell.

FIG. 8A illustrates that the re-change of the fronthaul path and the re-change of the control path for the target cell are performed in parallel, but the present disclosure is not limited thereto. For example, the re-change of the fronthaul path and the re-change of the control path for the target cell may be performed in a predetermined order or in an arbitrary order.

Referring to FIG. 8A, the source DU 310 may restart MAC scheduling for the target cell (830), and may stop buffering of the fronthaul message for the target cell (840). The source DU 310 may remove, from the target DU 320, the MAC context (e.g., at least one first UE context and/or at least one second UE context) for the target cell (850). For example, the source DU 310 may provide the target DU 320 with a message, an instruction, data, and/or information for requesting (or indicating, instructing) the target DU 320 to remove the MAC context for the target cell. The target DU 320 may remove the MAC context for the target cell according to a message, an instruction, data, and/or information requesting (or indicating, instructing) the removal of the MAC context for the target cell from the source DU 310.

Referring to FIG. 8A, the source DU 310 may remove cell configuration information for the target cell from the target DU 320 (860). For example, the source DU 310 may provide the target DU 320 with a message, an instruction, data, and/or information for requesting (or indicating, instructing) the removal of the cell configuration information for the target cell. The target DU 320 may remove (e.g., initialize) the cell configuration information for the target cell configured for the target DU 320, according to a message, an instruction, data, and/or information for requesting (or indicating, instructing) to remove the cell configuration information for the target cell from the source DU 310.

According to an embodiment of the present disclosure, operations according to the failure of the third task are not limited to those illustrated in FIG. 8A. For example, operations not illustrated in FIG. 8A may be further performed or some operations illustrated in FIG. 8A may be omitted, depending on the failure of the third task. According to an embodiment of the present disclosure, the order of operations according to the failure of the third task is not limited to that illustrated in FIG. 8A. For example, operations according to the failure of the third task may be performed in a different order, simultaneously, independently, and/or in parallel.

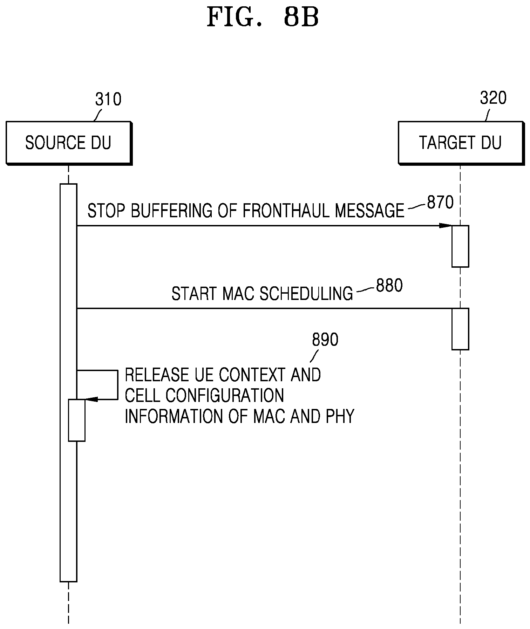

FIG. 8B is a diagram illustrating an example of removing MAC context and MAC/PHY cell configuration information from a source DU according to success of a third task, according to an embodiment of the present disclosure.

In describing FIG. 8B, any descriptions overlapping with the above descriptions in any one of FIGS. 1 to 8A may be omitted.

In an embodiment of the present disclosure, as the success of the third task being identified (or determined), the electronic device may stop buffering of the fronthaul message for the target cell of the target DU 320. For example, the electronic device may stop buffering of the fronthaul message such that the target DU 320 receives or transmits the fronthaul message for the target cell. The electronic device may control the source DU 310, the target DU 320, or a module (e.g., a fronthaul message handler or a fronthaul splitter) for managing a fronthaul message to stop buffering of the fronthaul message for the target cell of the target DU 320. For example, the electronic device may stop buffering of the fronthaul message for the target cell of the target DU 320 by transmitting, to the target DU 320 or the fronthaul message management module, a message, an instruction, data, or information for requesting (or indicating or instructing) to stop buffering of the fronthaul message for the target cell.

In an embodiment of the present disclosure, as the success of the third task being identified (or determined), the electronic device may start MAC scheduling for the target cell of the target DU 320. The electronic device may control the source DU 310 and/or the target DU 320 so as to start MAC scheduling for the target cell of the target DU 320. For example, the electronic device may transmit, to the target DU 320, a message, an instruction, data, or information for requesting (or indicating, instructing) the start of MAC scheduling for the target cell, such that the target DU 320 may start MAC scheduling for the target cell.

In an embodiment of the present disclosure, as identifying (or determining) the success of the third task, the electronic device may initialize the MAC layer and the PHY layer of the source DU 310 with respect to the target cell. For example, the electronic device may release (or remove), from the source DU 310, the MAC context, the MAC cell configuration information, and the PHY cell configuration information for the target cell. In an embodiment of the present disclosure, the electronic device may control the source DU 310 and/or the target DU 320 to release (or remove), from the source DU 310, the MAC context, the MAC cell configuration information, and the PHY cell configuration information for the target cell.

Referring to FIG. 8B, the source DU 310 may stop buffering of the fronthaul message for the target cell of the target DU 320 (870). For example, the source DU 310 may provide the target DU 320 with a message, an instruction, data, and/or information for requesting (or indicating or instructing) to stop buffering of the fronthaul message for the target cell, and the target DU 320 may stop buffering of the fronthaul message for the target cell. Referring to FIG. 8B, the source DU 310 may start MAC scheduling for the target cell of the target DU 320 (880). For example, the source DU 310 may provide the target DU 320 with a message, an instruction, data, and/or information for requesting (or indicating or instructing) the start of MAC scheduling for the target cell, and the target DU 320 may start MAC scheduling for the target cell.

Referring to FIG. 8B, the source DU 310 may release (or control) the MAC context, the MAC cell configuration information, and the PHY cell configuration information for the target cell (860).

According to an embodiment of the present disclosure, operations according to the success of the third task are not limited to those illustrated in FIG. 8B. For example, operations not illustrated in FIG. 8B may be further performed or some operations illustrated in FIG. 8B may be omitted according to the failure of the third task. According to an embodiment of the present disclosure, the order of operations according to the success of the third task is not limited to that illustrated in FIG. 8B. For example, operations according to the success of the third task may be performed in a different order, simultaneously, independently, and/or in parallel.

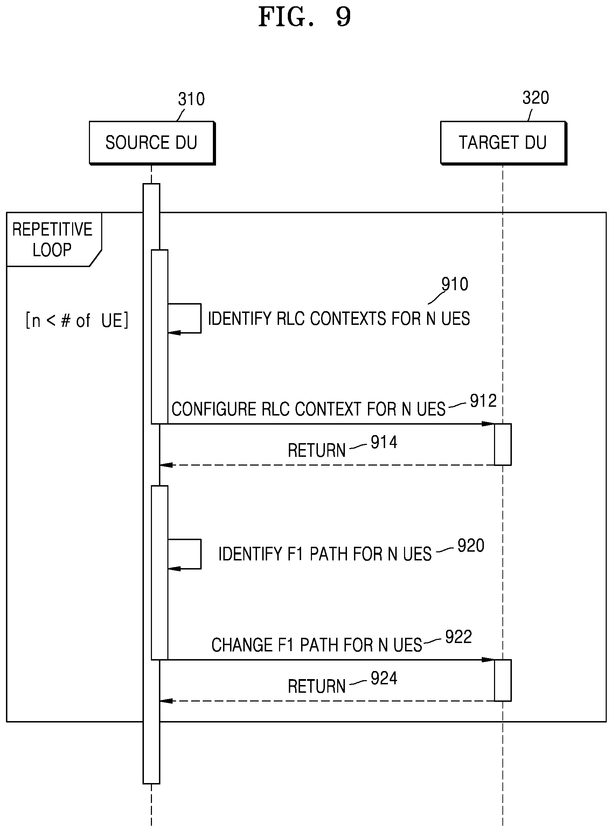

FIG. 9 is a diagram illustrating an example in which an electronic device controls a fourth task, according to an embodiment of the present disclosure.

In describing FIG. 9, any descriptions overlapping with the above descriptions in any one of FIGS. 1 to 8B may be omitted.

In an embodiment of the present disclosure, when the third task succeeds, the electronic device may control the fourth task of replicating the third UE context (e.g., RLC context) of the plurality of UEs associated with the target cell of the source DU 310 to the target DU 320 and switching the F1 path of the plurality of UEs from the source DU 310 to the target DU 320. For example, the cell migration module of the electronic device may control the source DU 310 and/or the target DU 320 to perform an operation for the fourth task.

In an embodiment of the present disclosure, the electronic device may control the fourth task in units of UEs. For example, the electronic device may repeatedly perform replication of the third UE context and switching of the F1 path in units of UEs for the plurality of UEs associated with the target cell. The electronic device may attempt replication of the third UE context and switching of the F1 path in units of UEs for all UEs associated with the target cell.

For example, the electronic device may replicate the third UE context of some of the plurality of UEs associated with the target cell to the target DU 320, may switch the F1 path of some UEs from the source DU 310 to the target DU 320, may replicate the third UE context of some other UEs of the plurality of UEs associated with the target cell to the target DU 320, and may switch the F1 path of some other UEs from the source DU 310 to the target DU 320.

For example, the electronic device may replicate a third UE context for a first UE group including some UEs among the plurality of UEs associated with the target cell to the target DU 320, may switch an F1 path of the first UE group from the source DU 310 to the target DU 320, may replicate a third UE context for a second UE group including some other UEs among the plurality of UEs associated with the target cell to the target DU 320 in a next loop, and may switch an F1 path of the second UE group from the source DU 310 to the target DU 320.

In an embodiment of the present disclosure, the electronic device (e.g., the cell migration module) may identify (or obtain) a third UE context for n UEs (1≤n≤the number of UEs ("# of UE")) among a plurality of UEs associated with the target cell. The third UE context may include UE context (e.g., RLC context) configured for (or included in) the RLC layer of the source DU 310. For example, the electronic device may control the source DU 310 to identify (or obtain) the third UE context for n UEs associated with the target cell of the source DU 310.

In an embodiment of the present disclosure, the electronic device may replicate (or configure or migrate) the third UE context for n UEs associated with the target cell of the source DU 310 to the target DU 320. For example, the electronic device may replicate the third UE context (e.g., RLC context) for n UEs associated with the target cell of the RLC layer of the source DU 310 to the RLC layer of the target DU 320. For example, the electronic device may control the source DU 310 and/or the target DU 320 to replicate the third UE context for n UEs associated with the target cell of the source DU 310 to the target DU 320.

In an embodiment of the present disclosure, the electronic device (e.g., cell migration module) may identify an F1 path for n UEs (1≤n≤the number of UEs (# of UE)) among the plurality of UEs associated with the target cell. The F1 path may include a path (or interface) between the DU (e.g., the RLC layer of the DU) and the CU. A plurality of F1 paths may be configured for one UE. For example, the electronic device may control the source DU 310 to identify (or obtain) F1 paths for n UEs associated with the target cell.

In an embodiment of the present disclosure, the electronic device may change (or switch) the F1 path for n UEs associated with the target cell of the source DU 310 from the source DU 310 to the target DU 320. For example, the electronic device may control the source DU 310 and/or the target DU 320 to change the F1 path for n UEs associated with the target cell of the source DU 310 from the source DU 310 to the target DU 320. For example, for n UEs, the electronic device may release the F1 path between the source DU 310 and the CU and may configure (or generate) the F1 path between the target DU 320 and the CU.

In an embodiment of the present disclosure, among n UEs associated with the target cell, a UE whose communication with the core network through the target cell is disconnected may perform a random access (RA). For example, the UE whose communication with the core network through the target cell is disconnected while the fourth task is performed may perform a random access (RA). For example, in the process of replicating the third UE context and changing the F1 path for n UEs associated with the target cell, the UE that fails to replicate the third UE context or change the F1 path may be disconnected from the core network through the target cell.

Referring to FIG. 9, the source DU 310 may identify RLC contexts for n UEs associated with a target cell (910). The source DU 310 may configure (or replicate, migrate) the RLC context for n UEs associated with the target cell to the target DU 320 (912). For example, the source DU 310 may provide the target DU 320 with data, parameters, or information for establishing an RLC context for n UEs associated with the target cell. For example, the source DU 310 may transmit a message, an instruction, data, and/or information requesting (or indicating, instructing) the configuration (or replication) of one or more second UE contexts for the target cell. The target DU 320 may perform an operation of configuring, for the target DU 320, an RLC context for n UEs associated with the target cell. The target DU 320 may provide the source DU 310 with a response 914 indicating completion (or success) of configuration of the RLC context for n UEs associated with the target cell.

Referring to FIG. 9, the source DU 310 may identify an F1 path for n UEs associated with a target cell (920). The source DU 310 may change (or switch) the F1 path for n UEs associated with the target cell from the source DU 310 to the target DU 320 (922). For example, the source DU 310 may provide data, parameters, or information to the target DU 320 to change the F1 path for n UEs associated with the target cell. For example, the source DU 310 may transmit, to the target DU 320, a message, an instruction, data, and/or information for requesting (or indicating or instructing) the configuration (or generation) of the F1 path for n UEs associated with the target cell. The target DU 320 may perform an operation of configuring an F1 path for n UEs associated with the target cell between the target DU 320 (e.g., an RLC layer) and the CU. The source DU 310 may perform an operation of releasing the F1 path for n UEs associated with the target cell between the source DU 310 (e.g., the RLC layer) and the CU. The target DU 320 may provide the source DU 310 with a response 924 indicating the completion (or success) of the configuration of the F1 path for n UEs associated with the target cell.

In an embodiment of the present disclosure, among n UEs associated with the target cell, a UE whose communication with the core network through the target cell is disconnected may perform an RA. As it costs more to restore the already changed configuration and path of the MAC layer and the PHY layer, the UE that fails to migrate the RLC layer may individually perform the RA.

The repetitive loop shown in FIG. 9 may be repeated until replication of the third UE context and switching of the F1 path are attempted for all UEs associated with the target cell.

Although FIG. 9 illustrates that the change of the F1 path is performed (922) after the RLC context is configured (912), the present disclosure is not limited thereto. For example, the change of the F1 path may be performed (922) before the RLC context is configured (912). For example, the configuration (912) of the RLC context and the change (922) of the F1 path may be performed simultaneously, independently, or in parallel.

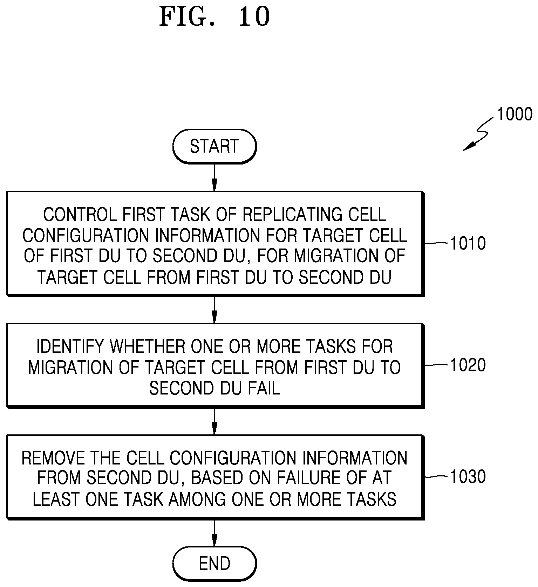

FIG. 10 is a diagram illustrating an example of an operating method of an electronic device according to an embodiment of the present disclosure.

In describing FIG. 10, any descriptions overlapping with the above descriptions in any one of FIGS. 1 to 9 may be omitted.

FIG. 10 may illustrate an example of an operating method 1000 of the electronic device. The electronic device that performs the method 1000 may be an electronic device including a cell migration module (e.g., a scaling agent module) that manages, controls, or processes cell migration, and may include a device of a source DU, a device of a target DU, and/or other device. For example, the device of the source DU may include a cell migration module. For example, the device of the target DU may include a cell migration module. For example, the other device different from the source DU and the target DU may include a cell migration module.

Referring to FIG. 10, the method 1000 according to an embodiment of the present disclosure may include operations 1010 to 1030. In an embodiment of the present disclosure, operations 1010 to 1030 of the method 1000 may be performed by at least one processor included in the electronic device. The method 1000 is not limited to those shown in FIG. 10, and in one or more embodiments, may further include operations not shown in FIG. 10, or some operations may be omitted.

In operation 1010, the electronic device may control a first task of replicating cell configuration information for a target cell of a first DU to a second DU, for migration of the target cell from the first DU to the second DU.

In operation 1020, the electronic device may identify whether one or more tasks for migration of the target cell from the first DU to the second DU fail. In an embodiment of the present disclosure, the electronic device may identify a failure of the first task. For example, when a replication completion (or success) response of the cell configuration information for at least one layer of the second DU is not identified, the electronic device may determine that the first task fails.

In an embodiment of the present disclosure, the electronic device may identify the success of the first task. When the first task succeeds, the electronic device may control a second task of replicating one or more first UE contexts for the target cell of the first DU to the second DU. In an embodiment of the present disclosure, the electronic device may identify the failure of the second task, based on the number of replication completion responses of the one or more first UE contexts being less than a reference number of responses.

In an embodiment of the present disclosure, the electronic device may identify the success of the first task and may identify the success of the second task. When the first task and the second task succeed, the electronic device may control a third task of switching a fronthaul path from the first DU to the second DU, replicating one or more second UE contexts for the target cell of the first DU to the second DU, and changing a control path from the first DU to the second DU. In an embodiment of the present disclosure, the electronic device may identify the failure of the third task, based on the number of completion responses identified within a predetermined time being less than a predetermined number.

In operation 1030, the electronic device may remove the cell configuration information from the second DU, based on a failure of at least one task among the one or more tasks. According to an embodiment of the present disclosure, the electronic device may remove the cell configuration information from the second DU, based on the failure of the first task. According to an embodiment of the present disclosure, when the second task fails, the electronic device may remove at least one first UE context for the target cell from the second DU, and may remove the cell configuration information from the second DU.

According to an embodiment of the present disclosure, when the third task fails, the electronic device may re-switch the fronthaul path from the second DU to the first DU, may remove at least one first UE context for the target cell from the second DU, and may remove the cell configuration information from the second DU. According to an embodiment of the present disclosure, when the third task fails, the electronic device may re-change the control path from the second DU to the first DU, may remove at least one first UE context for the target cell from the second DU, and may remove the cell configuration information from the second DU. According to an embodiment of the present disclosure, based on the failure of the third task, the electronic device may remove at least one first UE context for the target cell and at least one second UE context for the target cell from the second DU, and may remove the cell configuration information from the second DU.

According to an embodiment of the present disclosure, the electronic device may control a fourth task of replicating, to the second DU, a third UE context of a plurality of UEs associated with the target cell of the first DU and switching an F1 path of the plurality of UEs from the first DU to the second DU, based on the success of the first task, the second task, and the third task. Among the plurality of UEs, at least one UE whose communication with the core network through the target cell is disconnected may perform an RA.

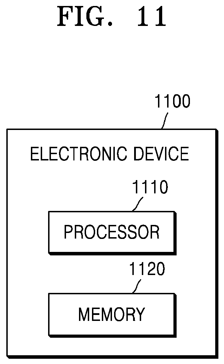

FIG. 11 is a diagram illustrating an example of an electronic device according to an embodiment of the present disclosure.

In the description of FIG. 11, any descriptions overlapping with the above descriptions in any one of FIGS. 1 to 10 may be omitted.

An electronic device 1100 illustrated in FIG. 11 is an electronic device that performs a cell migration operation for a DU, and may be a server device. For example, the electronic device 1100, which is a communication device constituting a RAN, may be the server device constituting an existing RAN, such as a server device performing an RU function, a server device performing a DU function, a server device performing a CU function, or a server device performing an OAM function, or may be a separate server device (e.g., a scaling agent device or the like) that controls cell migration.

In an embodiment of the present disclosure, the electronic device 1100 may include at least one processor 1110 and a memory 1120 but is not limited thereto.

The processor 1110 may be electrically connected to the components included in the electronic device 1100 and may execute operations or data processing related to control and/or communication of the components included in the electronic device 1100. In an embodiment of the present disclosure, the processor 1110 may load and process a request, a command, or data received from at least one of the other components in the memory, and may store processing result data in the memory. The processor 1110 may be configured to control a series of processes such that the electronic device 1100 operates according to the above-described embodiments, and may be configured as one or more processors.

The one or more processors included in the processor 1110 may be circuitry such as a System on Chip (SoC), an Integrated Circuit (IC), or the like. The one or more processors included in the processor 1110 may include at least one of a general-purpose processor such as a central processing unit (CPU), a microprocessor unit (MPU), an application processor (AP), a digital signal processor (DSP), etc., a graphic-dedicated processor such as a graphical processing unit (GPU), a vision processing unit (VPU), an artificial intelligence-dedicated processor such as a neural processing unit (NPU), or a communication-dedicated processor such as a communication processor (CP). When the one or more processors included in the processor 1110 are each an artificial intelligence dedicated processor, the artificial intelligence dedicated processor may be designed in a hardware structure specialized for processing a specific artificial intelligence model.

The processor 1110 may include various types of processing circuitry and/or a plurality of processors. For example, the term "processor" used in the present disclosure, including the claims, may include various types of processing circuitry including at least one processor. One or more of the at least one processor may be configured to perform one or more functions in the present disclosure, individually and/or collectively in a distributed manner. In the present disclosure, when "processor", "at least one processor", and "one or more processors" are described as being configured to perform a plurality of functions, it may include a situation in which one processor performs some of the functions and another processor(s) performs another part of the functions, and a situation in which a single processor performs all the functions. In addition, at least one processor may include a combination of processors that perform various functions in a distributed manner. At least one processor may execute program instructions to achieve or perform various functions.

The processor 1110 may write data to the memory 1120 or read data stored in the memory 1120, and in particular, may execute a program or at least one instruction stored in the memory 1120 to process data according to a predefined operation rule or an artificial intelligence model. The processor 1110 may control input data to be processed according to a predefined operation rule, algorithm, method, or model stored in the memory 1120. The processor 1110 may control input data to be processed based on data stored in the memory 1120. The processor 1110 may perform, by using input data, an operation of a predefined operation rule, algorithm, method, or model stored in the memory 1120.

The memory 1120 may be electrically connected to the processor 1110 and may store one or more modules, algorithms, operation rules, models, programs, instructions, or data related to operations of components included in the electronic device 1100. For example, the memory 1120 may store one or more modules, algorithms, operation rules, models, programs, instructions, or data for processing and control by the processor 1110. The memory 1120 may be configured as a storage medium such as a flash memory type memory, a hard disk type memory, a multimedia card micro type memory, a card type memory (e.g., SD or XD memory), a random access memory (RAM), a static random access memory (SRAM), a read-only memory (ROM), an electrically erasable programmable read-only memory (EEPROM), a programmable read-only memory (PROM), a magnetic memory, a magnetic disk, and an optical disk, or a combination of storage media, but is not limited thereto. The memory 1120 may not exist separately and may be configured to be included in the processor 1110. The memory 1120 may be configured as a volatile memory, a non-volatile memory, or a combination of a volatile memory and a non-volatile memory. The memory 1120 may store a program or at least one instruction for performing the operations according to the above-described embodiments. The memory 1120 may provide the stored data to the processor 1110 according to a request of the processor 1110.

In an embodiment of the present disclosure, the memory 1120 may store data or information which is identified, obtained, generated, or determined by the electronic device 1100. The memory 1120 may store data or information which is identified, obtained, generated, or determined by the electronic device 1100, in a compressed form.

Some modules (e.g., a cell migration module) that perform at least one operation of the electronic device 1100 may be implemented as a hardware module, a software module, and/or a combination thereof. The memory 1120 may include software modules that perform at least some of the operations of the electronic device 1100 described above. In an embodiment of the present disclosure, the module included in the memory 1120 may perform an operation by being executed by the processor 1110. For example, a module (i.e., a software module) included in the memory 1120 may include a program, a model, or an algorithm which is executed according to a control or command by the processor 1110 and is configured to perform operations of deriving output data for input data. Some modules performing at least one operation of the electronic device 1100 may be composed of a plurality of sub-modules or may constitute one module.

The electronic device 1100 may include more components than the components illustrated in FIG. 11. In an embodiment of the present disclosure, the electronic device 1100 may further include a communication interface (or a communication module) for communication with an external device. In an embodiment of the present disclosure, the electronic device 1100 may further include an input/output device and/or an input/output interface.

In an embodiment of the present disclosure, the electronic device 1100 may include a communication module for communicating with an external device. For example, the communication module of the electronic device 1100 may support establishing a wired or wireless communication channel with another external device or a server and performing communication through the established communication channel. For example, the electronic device 1100 may communicate with a server device constituting an existing RAN, such as a server device performing an RU function, a server device performing a DU function, a server device performing a CU function, or a server device performing an OAM function, or with a separate server device (e.g., a scaling agent device) for controlling cell migration, through the communication module.

In an embodiment of the present disclosure, the communication module may receive a signal, information, a request, and/or data from another external electronic device or server through wired communication or wireless communication, or may transmit a signal, information, a request, and/or data to the other external electronic device or the server. According to an embodiment of the present disclosure, the communication module may include a wireless communication module (e.g., a cellular communication module, a short-range wireless communication module, or a global navigation satellite system (GNSS) communication module) or a wired communication module (e.g., a local area network (LAN) communication module or a power line communication module), and may communicate with an external electronic device or a server through at least one network, for example, a short-range communication network (e.g., Bluetooth, WiFi direct, or infrared data association (IrDA)) or a long-range communication network (e.g., a cellular network, the Internet, or a computer network (e.g., LAN or WAN)) by using any one of the communication modules.

In an embodiment of the present disclosure, the electronic device 1100 may transmit and receive signals, data, requests, and/or information to and from an external device through a network and a communication module. For example, the electronic device 1100 and the external device may directly transmit and receive signals, data, requests, and/or information, but are not limited thereto. For example, the electronic device 1100 and the external device may indirectly transmit and receive signals, data, requests, and/or information via another device.

In any one of FIGS. 1 to 11, the operation described as being performed by the electronic device may be performed by a cell migration module of the electronic device. For example, the operation described as being performed by the electronic device may be performed by at least one processor of the electronic device.

In any one of FIGS. 1 to 11, the operation described as being performed by the source DU 310 may be performed by an electronic device in which the source DU 310 is included (or configured). For example, the operation described as being performed by the source DU 310 may be performed by at least one processor of the electronic device in which the source DU 310 is included (or configured).

In any one of FIGS. 1 to 11, the operation described as being performed by the target DU 320 may be performed by an electronic device in which the target DU 320 is included (or configured). For example, the operation described as being performed by the target DU 320 may be performed by at least one processor of the electronic device in which the target DU 320 is included (or configured).

According to an embodiment of the present disclosure, an operating method of an electronic device may include, for migration of a target cell from a first DU to a second DU, controlling a first task of replicating cell configuration information for the target cell of the first DU to the second DU. According to an embodiment of the present disclosure, the operating method of the electronic device may include identifying whether one or more tasks for migration of the target cell from the first DU to the second DU fail. According to an embodiment of the present disclosure, the operating method of the electronic device may include removing the cell configuration information from the second DU, based on a failure of at least one task among the one or more tasks.

According to an embodiment of the present disclosure, determining whether a failure occurs in each step of cell migration and recovering the failure may be more advantageous in terms of time and resources than determining whether a failure occurs, after all processes are completed.

According to an embodiment of the present disclosure, the identifying of whether the one or more tasks for migration of the target cell from the first DU to the second DU fail may include identifying a failure of the first task.

According to an embodiment of the present disclosure, the removing of the cell configuration information from the second DU based on the failure of the at least one task may include removing the cell configuration information from the second DU, based on the failure of the first task.

According to an embodiment of the present disclosure, the identifying of the failure of the first task may include determining the failure of the first task, based on that a replication completion response of the cell configuration information for at least one layer of the second DU is not identified.

According to an embodiment of the present disclosure, the identifying of whether the one or more tasks for migration of the target cell from the first DU to the second DU fail may include identifying a success of the first task. According to an embodiment of the present disclosure, the identifying of whether one or more tasks for migration of the target cell from the first DU to the second DU fail may include controlling a second task of replicating one or more first UE contexts regarding the target cell of the first DU to the second DU, based on the success of the first task. According to an embodiment of the present disclosure, the identifying of whether the one or more tasks for migration of the target cell from the first DU to the second DU fail may include identifying the failure of the second task based on a number of replication completion responses of the one or more first UE contexts being less than a reference number of responses.

According to an embodiment of the present disclosure, the removing of the cell configuration information from the second DU based on the failure of the at least one task may include removing at least one first UE context for the target cell from the second DU and removing the cell configuration information from the second DU based on the failure of the second task.

According to an embodiment of the present disclosure, the identifying of whether the one or more tasks for migration of the target cell from the first DU to the second DU fail the identifying of whether the one or more tasks for migration of the target cell from the first DU to the second DU fail may include identifying whether the one or more tasks for migration of the target cell from the first DU to the second DU fail. According to an embodiment of the present disclosure, the identifying of whether the one or more tasks for migration of the target cell from the first DU to the second DU fail may include identifying a success of a second task of replicating one or more first UE contexts regarding the target cell of the first DU to the second DU. According to an embodiment of the present disclosure, the identifying of whether the one or more tasks for migration of the target cell from the first DU to the second DU fail may include controlling a third task of switching a fronthaul path from the first DU to the second DU, replicating one or more second UE contexts for the target cell of the first DU to the second DU, and changing a control path from the first DU to the second DU. According to an embodiment of the present disclosure, the identifying of whether the one or more tasks for migration of the target cell from the first DU to the second DU fail may include identifying a failure of the third task, based on a number of completion responses identified within a predetermined time being less than a predetermined number.

According to an embodiment of the present disclosure, the removing of the cell configuration information from the second DU based on the failure of the at least one task may include re-switching the fronthaul path from the second DU to the first DU, based on the failure of the third task, removing at least one first UE context for the target cell from the second DU, and removing the cell configuration information from the second DU.

According to an embodiment of the present disclosure, the removing of the cell configuration information from the second DU based on the failure of the at least one task may include re-changing the control path from the second DU to the first DU, based on the failure of the third task, removing at least one first UE context for the target cell from the second DU, and removing the cell configuration information from the second DU.

According to an embodiment of the present disclosure, the removing of the cell configuration information from the second DU based on the failure of the at least one task may include removing at least one first UE context for the target cell and at least one second UE context for the target cell from the second DU, based on the failure of the third task, and removing the cell configuration information from the second DU.

According to an embodiment of the present disclosure, the identifying of whether the one or more tasks for migration of the target cell from the first DU to the second DU fail may include identifying the success of the first task. According to an embodiment of the present disclosure, the identifying of whether the one or more tasks for migration of the target cell from the first DU to the second DU fail may include identifying a success of a second task of replicating one or more first UE contexts for the target cell of the first DU to the second DU. According to an embodiment of the present disclosure, the identifying of whether the one or more tasks for migration of the target cell from the first DU to the second DU fail may include switching a fronthaul path from the first DU to the second DU, replicating one or more second UE contexts for the target cell of the first DU to the second DU, and identifying a success of a third task of changing a control path from the first DU to the second DU.

According to an embodiment of the present disclosure, the operating method may further include, based on the success of the third task, controlling a fourth task of replicating a third UE context of a plurality of UEs associated with the target cell of the first DU to the second DU, and switching an F1 path of the plurality of UEs from the first DU to the second DU.

In an embodiment of the present disclosure, at least one UE whose communication with a core network through a target cell is disconnected, among the plurality of UEs, may perform a random access (RA).

According to an embodiment of the present disclosure, the operating method may include determining whether a number of migration attempts for the target cell from the first DU to the second DU is less than a maximum number of attempts, based on the at least one failure. In an embodiment of the present disclosure, the method may include reattempting the migration of the target cell from the first DU to the second DU, based on determining that the number of migration attempts is less than the maximum number of attempts.

In an embodiment of the present disclosure, a program for performing the operating method of the electronic device on a computer may be recorded on a computer-readable recording medium.

According to an embodiment of the present disclosure, an electronic device may include a memory storing one or more instructions and at least one processor configured to execute the one or more instructions stored in the memory. According to an embodiment of the present disclosure, the at least one processor may be configured to execute the one or more instructions to cause an electronic device to control a first task of replicating cell configuration information for a target cell of a first DU to a second DU so as to migrate the target cell from the first DU to the second DU. According to an embodiment of the present disclosure, the at least one processor may be configured to execute the one or more instructions to cause the electronic device to identify whether one or more tasks for migration of the target cell from the first DU to the second DU fail. According to an embodiment of the present disclosure, the at least one processor may be configured to execute the one or more instructions to cause the electronic device to remove the cell configuration information from the second DU, based on a failure of at least one task among the one or more tasks.

According to an embodiment of the present disclosure, the at least one processor may be configured to execute the one or more instructions to cause the electronic device to determine the failure of the first task, based on that a replication completion response of the cell configuration information for at least one layer of the second DU is not identified. According to an embodiment of the present disclosure, the at least one processor may be configured to execute the one or more instructions to cause the electronic device to remove the cell configuration information from the second DU, based on the failure of the first task.

In an embodiment of the present disclosure, the at least one processor may be configured to execute the one or more instructions to cause the electronic device to identify the success of the first task. According to an embodiment of the present disclosure, the at least one processor may be configured to execute the one or more instructions to cause the electronic device to control a second task of replicating one or more first UE contexts for the target cell of the first DU to the second DU, based on the success of the first task. In an embodiment of the present disclosure, the at least one processor may be configured to execute the one or more instructions to cause the electronic device to identify the failure of the second task, based on the number of replication completion responses of the one or more first UE contexts being less than a reference number of responses.

According to an embodiment of the present disclosure, the at least one processor may execute the one or more instructions to cause the electronic device to, based on the failure of the second task, remove at least one first UE context for the target cell from the second DU, and remove the cell configuration information from the second DU.

In an embodiment of the present disclosure, the at least one processor may be configured to execute the one or more instructions to cause the electronic device to identify the success of the first task. According to an embodiment of the present disclosure, the at least one processor may execute the one or more instructions to cause the electronic device to identify a success of a second task of replicating one or more first UE contexts for the target cell of the first DU to the second DU. According to an embodiment of the present disclosure, the at least one processor may be configured to execute the one or more instructions to cause the electronic device to control a third task of switching a fronthaul path from the first DU to the second DU, replicating one or more second UE contexts for the target cell of the first DU to the second DU, and changing a control path from the first DU to the second DU. In an embodiment of the present disclosure, the at least one processor may be configured to execute the one or more instructions to cause the electronic device to identify the failure of the third task, based on the number of completion responses identified within a predetermined time being less than a predetermined number.

According to an embodiment of the present disclosure, the at least one processor may be configured to execute the one or more instructions to cause the electronic device to re-switch the fronthaul path from the second DU to the first DU, based on the failure of the third task, remove at least one first UE context for the target cell from the second DU, and remove the cell configuration information from the second DU.

According to an embodiment of the present disclosure, the at least one processor may be configured to execute the one or more instructions to cause the electronic device to re-change the control path from the second DU to the first DU, based on the failure of the third task, remove at least one first UE context for the target cell from the second DU, and remove the cell configuration information from the second DU.

According to an embodiment of the present disclosure, the at least one processor may be configured to execute the one or more instructions to cause the electronic device to, based on the failure of the third task, remove at least one first UE context for the target cell and at least one second UE context for the target cell from the second DU, and remove the cell configuration information from the second DU.

In an embodiment of the present disclosure, the at least one processor may be configured to execute the one or more instructions to cause the electronic device to identify the success of the first task. According to an embodiment of the present disclosure, the at least one processor may be configured to execute the one or more instructions to cause the electronic device to identify a success of a second task of replicating one or more first UE contexts for the target cell of the first DU to the second DU. According to an embodiment of the present disclosure, the at least one processor may be configured to execute the one or more instructions to cause the electronic device to identify a success of a third task of switching a fronthaul path from the first DU to the second DU, replicating one or more second UE contexts for the target cell of the first DU to the second DU, and changing a control path from the first DU to the second DU. According to an embodiment of the present disclosure, the at least one processor may be configured to execute the one or more instructions to cause the electronic device to control, based on the success of the third task, a fourth task of replicating, to the second DU, a third UE context of a plurality of UEs associated with the target cell of the first DU, and switching an F1 path of the plurality of UEs from the first DU to the second DU. In an embodiment of the present disclosure, at least one UE whose communication with a core network through the target cell is disconnected, among the plurality of UEs, may perform a random access (RA).

According to an embodiment of the present disclosure, the at least one processor may be configured to execute the one or more instructions to cause the electronic device to determine whether the number of migration attempts for the target cell from the first DU to the second DU is less than a maximum number of attempts, based on the at least one failure. In an embodiment of the present disclosure, the at least one processor may be configured to execute the one or more instructions to cause the electronic device to reattempt the migration of the target cell from the first DU to the second DU, based on determining that the number of migration attempts is less than the maximum number of attempts.

The machine-readable storage medium may be provided in the form of a non-transitory storage medium. Here, the term "non-transitory storage medium" is a tangible device and merely means that it does not include a signal (e.g., an electromagnetic wave), and the term does not distinguish between a case where data is semi-permanently stored in the storage medium and a case where data is temporarily stored in the storage medium. For example, the "non-transitory storage medium" may include a buffer in which data is temporarily stored.

According to an embodiment, a method according to various embodiments disclosed in the present specification may be included and provided in a computer program product. The computer program product may be traded between a seller and a buyer as a commodity. The computer program product may be distributed in the form of a machine-readable storage medium (e.g., a compact disc read only memory (CD-ROM)), or may be distributed (e.g., downloaded or uploaded) online through an application store or directly between two user devices (e.g., smartphones). In the case of online distribution, at least a portion of a computer program product (e.g., a downloadable app) may be at least temporarily stored in a machine-readable storage medium such as a memory of a manufacturer's server, a server of an application store, or a relay server, or may be temporarily generated.

## Claims

1. An operating method of an electronic device (1100), the operating method comprising:
controlling a first task of replicating cell configuration information for a target cell of a first distributed unit (DU) (310) to a second DU (320), for migration of the target cell from the first DU (310) to the second DU (320);
identifying whether one or more tasks for migration of the target cell from the first DU (310) to the second DU (320) fail; and
removing the cell configuration information from the second DU (320), based on a failure of at least one task among the one or more tasks.

2. The operating method of claim 1, wherein the identifying of whether the one or more tasks for migration of the target cell from the first DU to the second DU fail comprises:
identifying a failure of the first task, and
wherein the removing of the cell configuration information from the second DU, based on the failure of the at least one task comprises:
removing the cell configuration information from the second DU, based on the failure of the first task.

3. The operating method of claim 2, wherein the identifying of the failure of the first task comprises determining the failure of the first task, based on a replication completion response of the cell configuration information for at least one layer of the second DU not being identified.

4. The operating method of any one of claims 1 to 3, wherein the identifying of whether the one or more tasks for migration of the target cell from the first DU to the second DU fail comprises:
identifying a success of the first task;
controlling, based on the success of the first task, a second task of replicating one or more first user equipment (UE) contexts for the target cell of the first DU to the second DU; and
identifying a failure of the second task, based on a number of replication completion responses of the one or more first UE contexts being less than a reference number of responses.

5. The operating method of any one of claims 1 to 4, wherein the removing of the cell configuration information from the second DU, based on the failure of the at least one task comprises, based on the failure of the second task, removing at least one first UE context for the target cell from the second DU, and removing the cell configuration information from the second DU.

6. The operating method of any one of claims 1 to 5, wherein the identifying of whether the one or more tasks for migration of the target cell from the first DU to the second DU fail comprises:
identifying a success of the first task;
identifying a success of a second task of replicating one or more first UE contexts for the target cell of the first DU to the second DU;
controlling a third task of switching a fronthaul path from the first DU to the second DU, replicating one or more second UE contexts for the target cell of the first DU to the second DU, and changing a control path from the first DU to the second DU; and
identifying a failure of the third task, based on a number of completion responses identified within a predetermined time being less than a predetermined number.

7. The operating method of claim 6, wherein the removing of the cell configuration information from the second DU, based on the failure of the at least one task comprises, based on the failure of the third task, re-switching the fronthaul path from the second DU to the first DU, removing at least one first UE context for the target cell from the second DU, and removing the cell configuration information from the second DU.

8. The operating method of claim 6 or 7, wherein the removing of the cell configuration information from the second DU, based on the failure of the at least one task comprises, based on the failure of the third task, re-changing the control path from the second DU to the first DU, removing the at least one first UE context for the target cell from the second DU, and removing the cell configuration information from the second DU.

9. The operating method of any one of claims 6 to 8, wherein the removing of the cell configuration information from the second DU, based on the failure of the at least one task comprises, based on the failure of the third task, removing the at least one first UE context for the target cell and at least one second UE context for the target cell from the second DU, and removing the cell configuration information from the second DU.

10. The operating method of any one of claims 1 to 9, wherein the identifying of whether the one or more tasks for migration of the target cell from the first DU to the second DU fail comprises:
identifying a success of the first task;
identifying a success of a second task of replicating one or more first UE contexts for the target cell of the first DU to the second DU; and
identifying a success of a third task of switching a fronthaul path from the first DU to the second DU, replicating one or more second UE contexts for the target cell of the first DU to the second DU, and changing a control path from the first DU to the second DU,
wherein the operating method comprises, based on the success of the third task, controlling a fourth task of replicating a third UE context of a plurality of UEs associated with the target cell of the first DU to the second DU and switching an F1 path of the plurality of UEs from the first DU to the second DU, and
wherein at least one UE whose communication with a core network through the target cell is disconnected among the plurality of UEs performs a random access (RA).

11. The operating method of any one of claims 1 to 10, further comprising:
determining, based on the at least one failure, whether a number of migration attempts for the target cell from the first DU to the second DU is less than a maximum number of attempts; and
reattempting the migration of the target cell from the first DU to the second DU, based on determining that the number of migration attempts is less than the maximum number of attempts.

12. A computer-readable recording medium having recorded thereon a program for performing the operating method of any one of claims 1 to 11, on a computer.

13. An electronic device (1100) comprising:
a memory (1120) storing one or more instructions; and
at least one processor (1110) configured to execute the one or more instructions stored in the memory (1120),
wherein the at least one processor (1110) is configured to execute the one or more instructions to cause the electronic device to:
control a first task of replicating cell configuration information for a target cell of a first distributed unit (DU) to a second DU, for migration of the target cell from the first DU to the second DU;
identify whether one or more tasks for migration of the target cell from the first DU to the second DU fail; and
remove the cell configuration information from the second DU, based on a failure of at least one task among the one or more tasks.

14. The electronic device of claim 13, wherein the at least one processor (1110) is configured to execute the one or more instructions to cause the electronic device to:
determine a failure of the first task, based on a replication completion response of the cell configuration information for at least one layer of the second DU not being identified; and
remove the cell configuration information from the second DU, based on the failure of the first task.

15. The electronic device of claim 13 or 14, wherein the at least one processor (1110) is configured to execute the one or more instructions to cause the electronic device to:
identify a success of the first task;
control, based on the success of the first task, a second task of replicating one or more first user equipment (UE) contexts for the target cell of the first DU to the second DU; and
identify a failure of the second task, based on a number of replication completion responses of the one or more first UE contexts being less than a reference number of responses.
